# EUROPEAN PATENT APPLICATION

(11) **EP 4 797 761 A1**
(43) Date of publication of application: **26.08.2026**
(21) Application number: 23955711.9
(22) Date of filing: 18.10.2023
(51) Int. Cl.: H04W 16/22

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN); FAN, Jiangsheng, Dongguan, Guangdong 523860 (CN)
(74) Representative: RGTH
(86) International application number: PCT/CN2023/125245
(87) International publication number: WO 2025/081384

(57) **Abstract**

Provided are a wireless communication method, a terminal device, and a network device. The method comprises: a terminal device receives first information sent by a network device, wherein the first information carries a first model identifier, and the first model identifier comprises one or more of the following information: second information, associated with a first model; and third information, associated with a provider of the first model. In the embodiments of the present application, a manner of formulating the first model identifier is introduced. Therefore, communication devices in a communication system can interact by means of the first model identifier. Compared with conventional solutions in which a manner of formulating the first model identifier is not specified, the present application is conducive to unified understanding of the first model identifier by the communication devices in the communication system, and improves communication efficiency of the communication system.

## Description

### TECHNICAL FIELD

This application relates to the field of communications technologies, and more specifically, to a wireless communication method, a terminal device, and a network device.

### BACKGROUND

With the development of technologies, models have been introduced into many communication processes. In a model-based wireless communication process, a plurality of communications devices may be involved, and it is generally required to communicate, among the plurality of communications devices, which model is to be used. For example, in a federated learning scenario, a coordinator C is required to transmit a model inference request to each of a communications device A and a communications device B, and the model inference request is further required to indicate a model to be used by the communications device A and the communications device B. For another example, in a process of managing models, it is also required to indicate which model is a managed model. However, how to indicate a model among communications devices has not been addressed in current protocol discussions. Therefore, how to indicate a model among communications devices is a problem to be solved.

### SUMMARY

This application provides a wireless communication method, a terminal device, and a network device. The following describes the aspects related to this application.

According to a first aspect, a wireless communication method is provided, and includes: receiving, by a terminal device, first information transmitted by a network device, the first information carrying a first model identifier, where the first model identifier includes one or more of following information: second information, where the second information is associated with a first model; or third information, where the third information is associated with a provider of the first model.

According to a second aspect, a wireless communication method is provided, and includes: transmitting, by an access network device, first information to a terminal device, the first information carrying a first model identifier, where the first model identifier includes one or more of following information: second information, where the second information is associated with a first model; or third information, where the third information is associated with a provider of the first model.

According to a third aspect, a wireless communication method is provided, and includes: transmitting, by a core network device, first information to a terminal device, the first information carrying a first model identifier, where the first model identifier includes one or more of following information: second information, where the second information is associated with a first model; or third information, where the third information is associated with a provider of the first model.

According to a fourth aspect, a terminal device is provided, and includes: a receiving unit, configured to receive first information transmitted by a network device, the first information carrying a first model identifier, where the first model identifier includes one or more of following information: second information, where the second information is associated with a first model; or third information, where the third information is associated with a provider of the first model.

According to a fifth aspect, an access network device is provided, and includes: a transmitting unit, configured to transmit first information to a terminal device, the first information carrying a first model identifier, where the first model identifier includes one or more of following information: second information, where the second information is associated with a first model; or third information, where the third information is associated with a provider of the first model.

According to a sixth aspect, a core network device is provided, and includes: a transmitting unit, configured to transmit first information to a terminal device, the first information carrying a first model identifier, where the first model identifier includes one or more of following information: second information, where the second information is associated with a first model; or third information, where the third information is associated with a provider of the first model.

According to a seventh aspect, a terminal device is provided, and includes a processor, a memory, and a communications interface. The memory is configured to store one or more computer programs. The processor is configured to invoke the computer program in the memory, to cause the terminal device to execute some or all of the steps in the method according to the first aspect.

According to an eighth aspect, a network device is provided, and includes a processor, a memory, and a transceiver. The memory is configured to store one or more computer programs, and the processor is configured to invoke the computer program in the memory to cause the network device to execute some or all of the steps in the method according to the second aspect or the third aspect.

According to a ninth aspect, an embodiment of this application provides a communications system. The system includes the foregoing terminal device and/or network device. In another possible design, the system may further include another device that interacts with the terminal device or the network device in the solutions provided in embodiments of this application.

According to a tenth aspect, an embodiment of this application provides a computer-readable storage medium, where the computer-readable storage medium stores a computer program, and the computer program causes a communications device (for example, a terminal device or a network device) to execute some or all of steps in the method according to each of the foregoing aspects.

According to an eleventh aspect, an embodiment of this application provides a computer program product, where the computer program product includes a non-transitory computer-readable storage medium that stores a computer program, and the computer program is operable to cause a communications device (for example, a terminal device or a network device) to execute some or all of steps in the method according to each of the foregoing aspects. In some implementations, the computer program product may be a software installation package.

According to a twelfth aspect, an embodiment of this application provides a chip. The chip includes a memory and a processor, and the processor may invoke and run a computer program in the memory, to implement some or all of the steps of the methods according to the foregoing aspects.

In embodiments of this application, a manner of defining the first model identifier is introduced. In this way, communications devices in a communications system may interact with each other by using the first model identifier. Compared to a conventional solution not defining the first model identifier, understanding of the first model identifier among the various communications devices in the communications system is unified, thereby improving communication efficiency of the communications system.

In addition, since the first model identifier includes second information and/or third information, the communications device may learn, based on the second information, information associated with a first model, and/or may learn, based on the third information, information associated with a provider of the first model. This helps the communications device understand the first model based on the first model identifier, thereby properly using the first model, and improving performance of the first model.

### BRIEF DESCRIPTION OF DRAWINGS

FIG. 1 shows a wireless communications system 100 to which embodiments of this application are applied.
FIG. 2 is a schematic diagram of a neural network to which embodiments of this application are applicable.
FIG. 3 is a schematic diagram of a convolutional neural network (convolutional neural network, CNN) to which embodiments of this application are applicable.
FIG. 4 is a schematic diagram of channel estimation and signal recovery to which embodiments of this application are applicable.
FIG. 5 is a schematic diagram of a channel state information (channel-state information, CSI) feedback system, based on an artificial intelligence (artificial intelligence, AI) model, to which embodiments of this application are applicable.
FIG. 6 is a schematic diagram of a positioning scheme, based on an AI model, to which embodiments of this application are applicable.
FIG. 7 is a schematic diagram of beam management, based on an AI model, to which embodiments of this application are applicable.
FIG. 8 is a schematic diagram of a training process of vertical federated learning to which embodiments of this application are applicable.
FIG. 9 is a schematic diagram of an inference process of vertical federated learning to which embodiments of this application are applicable.
FIG. 10 is a diagram of a conventional learning scheme and a transfer learning scheme for comparison.
FIG. 11 is a schematic diagram of a first model identifier according to an embodiment of this application.
FIG. 12 is a schematic flowchart of a wireless communication method according to an embodiment of this application.
FIG. 13 is a schematic flowchart of allocation of a first model identifier according to an embodiment of this application.
FIG. 14 is a schematic flowchart of updating of a first model identifier according to an embodiment of this application.
FIG. 15 is a schematic flowchart of allocation of a first model identifier according to another embodiment of this application.
FIG. 16 is a schematic flowchart of allocation of a first model identifier according to another embodiment of this application.
FIG. 17 is a schematic flowchart of updating of a first model identifier according to another embodiment of this application.
FIG. 18 is a schematic diagram of a terminal device according to an embodiment of this application.
FIG. 19 is a schematic diagram of an access network device according to an embodiment of this application.
FIG. 20 is a schematic diagram of a core network device according to an embodiment of this application.
FIG. 21 is a schematic diagram of a structure of a communications apparatus according to an embodiment of this application.

### DESCRIPTION OF EMBODIMENTS

Technical solutions in this application are described below with reference to the accompanying drawings.

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access ( wideband code division multiple access, WCDMA) system, general packet radio service (general packet radio service, GPRS), a long-term evolution (long term evolution, LTE) system, an advanced long-term evolution (advanced long term evolution, LTE-A) system, an LTE frequency division duplex (frequency division duplex, FDD) system, an LTE time division duplex (time division duplex, TDD) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (non-terrestrial networks, NTN) system, a terrestrial networks (terrestrial networks, TN) system, a universal mobile telecommunications system (universal mobile telecommunication system, UMTS), a wireless local area networks (wireless local area networks, WLAN) system, a wireless fidelity (wireless fidelity, WIFI) system, and a 5th-generation (5th-generation, 5G) system. The technical solutions provided in this application may be further applied to another communications system, such as a future communications system, for example, a 6th generation mobile communications system, for another example, a satellite communication system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle-to-everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to unlicensed spectrum, and the unlicensed spectrum may also be considered as shared spectrum. Alternatively, the communications system in embodiments of this application may be applied to licensed spectrum, and the licensed spectrum may also be considered as dedicated spectrum.

An important feature of the communications system architecture (such as a 5G system architecture) is that the communications system architecture may be a service-oriented architecture. In other words, a network element (a service provider) in a core network may provide a specific service and is invoked by another network element (a consumer) through a defined application programming interface (application programming interface, API).

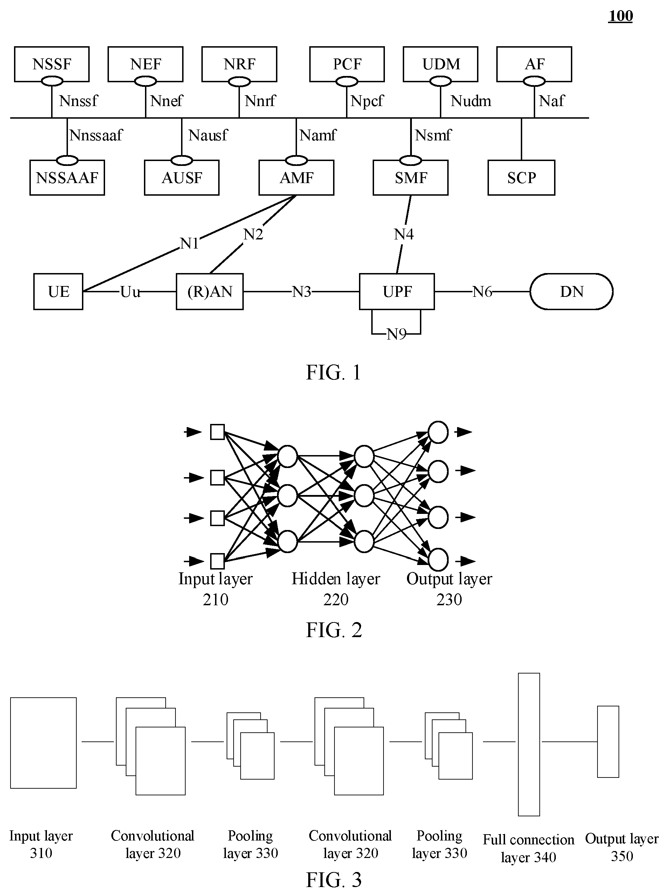

FIG. 1 is an example diagram of a system architecture of a wireless communications system to which embodiments of this application are applicable. For example, the communications system is a 5G system architecture. The wireless communications system may include a plurality of network elements, nodes, or devices, such as a terminal device, an access network (access network, AN) device, a user plane function (user plane function, UPF) network element, an access and mobility management function (access and mobility management function, AMF) network element, a session management function (session management function, SMF) network element, a policy control function (policy control function, PCF) network element, and an application function (application function, AF) network element. The wireless communications system may further include a data network (data network, DN), or the like.

The following provides examples to describe functions of parts or network elements involved in the wireless communications system in a 5G network.

Terminal device: The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Access network device: The access network device may be configured to provide a network access function for an authorized terminal device in a specific area, and can use transmission channels of different quality according to a level, a service requirement, and the like of the terminal device. The access network device can manage a wireless resource, and provide an access service for the terminal device, to complete forwarding of a control signal and data between the terminal device and a core network.

The access network device may be a device in a wireless network. The access network device may also be referred to as a radio access network (radio access network, RAN) device or a network device. For example, the access network device may be a base station. The access network device in embodiments of this application may refer to a radio access network (radio access network, RAN) node (or device) that connects the terminal device to a wireless network. The base station may broadly cover devices having the following various names, or may be interchanged with the devices having the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the access network device are not limited in embodiments of this application.

The base station may be a stationary or mobile base station. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the access network device in embodiments of this application may be a CU or a DU, or the access network device includes a CU and a DU. The gNB may further include an AAU.

The access network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the access network device and the terminal device are located is not limited.

UPF network element: The UPF is a user plane function in the core network, and may be responsible for forwarding and receiving of user data (for example, a service data flow) in the terminal device. The UPF may be connected to the access network device (such as a base station) and an external data network for performing data transmission. For example, the UPF may receive user data from the DN, and transmit the user data to the terminal device by using the access network device. Alternatively, the UPF may receive user data from the terminal device by using the access network device, and then forward the user data to the DN. A transmission resource and a scheduling function in the UPF that provide a service for the terminal device are managed and controlled by the SMF. In some embodiments, the UPF may be divided into an intermediate UPF (intermediate-UPF, I-UPF) and an anchor UPF (anchor-UPF, A-UPF). The I-UPF is connected to an access network, the A-UPF is a UPF of a session anchor, and the A-UPF may also be referred to as a PDU session anchor (PDU session anchor, PSA).

AMF network element: The AMF is a mobility management function in the core network, and may be configured to implement functions other than session management in functions of a mobility management network element (mobility management entity, MME), such as lawful interception or access authorization (or authentication). In some embodiments, in addition to performing mobility management on the terminal device, the AMF may be further responsible for forwarding a message related to session management between the terminal device and the SMF.

SMF network element: The SMF is a session management function in the core network, and is mainly responsible for session management, internet protocol (internet protocol, IP) address allocation and management of the terminal device, selection of a manageable user plane function, policy control, or a termination point of a charging function interface, downlink data notification, configuration of routing information for a user plane function, and the like.

PCF network element: The PCF is a policy management function in the core network, and may be responsible for formulation of policies related to mobility management, session management, charging, and the like of the terminal device. Specifically, the PCF may provide policy rule information and the like for a functional network element (for example, the AMF network element or the SMF network element) on a control plane, to manage and control mobility management, session management, and the like of the terminal device.

AF network element: The AF mainly supports interaction with a 3rd generation partnership project (3rd generation partnership project, 3GPP) core network to provide services, for example, affecting a data routing decision, a policy control function, or providing a network side with some services of a third party. In other words, the AF may be mainly configured to transfer a requirement of an application side on the network side. In some embodiments, the AF may be an internal application of an operator, such as an IP multimedia subsystem (IP multimedia subsystem, IMS) technology. In some embodiments, the AF may be understood as a third-party server, for example, an application server on an internet, which provides related service information, including providing the PCF with quality of service (quality of service, QoS) requirement information corresponding to a service, and transmitting user plane data information of a service to an A-UPF. In some embodiments, the AF may also be a service provider (content provider, CP). In some embodiments, if the AF is an internal AF of an operator, and is within a same trusted domain as other network functions (network function, NF), the AF may directly interact with and access other NFs. If the AF is not within the trusted domain, the AF is required to access other NFs through other network elements (for example, the NEF network element mentioned below).

DN: The DN refers to a network that may be used to provide transmission data. The DN may be a private network such as a local area network, may be an external network that is not managed and controlled by an operator, such as the Internet (internet), or may be a special-purpose network deployed by all operators, such as a network providing an IMS service.

It should be understood that the foregoing network elements in the core network may also be referred to as functional entities, which is not limited in this application. For example, the UPF network element may also be referred to as a UPF entity, and the AMF network element may also be referred to as an AMF entity. It should also be understood that in some embodiments, the xx network element or the xx functional entity may also be directly referred to as the xx, for example, the UPF network element (or the UPF entity) may be referred to as the UPF, and the AMF network element (or the AMF entity) may be referred to as the AMF. For ease of description, the xx (for example, the UPF or the AMF) mentioned in embodiments of this application may refer to the xx network element or the xx entity. Details are not described again below.

Optionally, the wireless communications system may further include other network elements such as a unified data management (unified data management, UDM) network element, an authentication server function (authentication server function, AUSF) network element, a network slice selection function (network slice selection function, NSSF) network element, a network exposure function (network exposure function, NEF) network element, and a network data analytics function (network data analytics function, NWDAF) network element, which is not limited in embodiments of this application.

The UDM network element is a subscription database in the core network, and may be used for functions such as generating and storing subscription data of a user in a network (for example, a 5G network) and managing authentication data. The UDM network element may support interaction with an external third-party server. The AUSF network element may be configured to: receive an identity authentication request for the terminal device from the AMF, request a key from the UDM, and then forward the delivered key to the AMF for authentication processing. The NSSF network element may be used for network slice selection. The NEF network element may be responsible for managing exposure of network data by a 5G network element. An external untrusted application is required to access internal data of the core network through the NEF, to ensure security of a 3GPP network. In some embodiments, the NEF network element may further provide functions such as QoS capability exposure for external applications, event subscription, and AF request distribution. The NWDAF network element may collect data from various network elements and network management systems of the core network, to perform big data statistics, analysis, or intelligent data analysis, so as to obtain a network side analysis result or network side prediction data, thereby assisting the various network elements in implementing more effective control on the terminal device based on data analysis results.

In the wireless communications system 100 shown in FIG. 1, the parts or network elements may communicate with each other by using interfaces. For example, the terminal device may perform an access stratum connection with the AN by using a Uu interface, and exchange transmission of an access stratum message and wireless data. The terminal device may perform a non-access stratum (none access stratum, NAS) connection with the AMF by using an N1 interface, and exchange a NAS message. The AN may be connected to the AMF by using an N2 interface, to transfer radio bearer control information from the core network side to the AN, or the like. The UPF may perform data transmission with the AN by using an N3 interface, and perform data transmission with the DN by using an N6 interface, and the like. For interfaces used to connect other parts or network elements, reference may be made to FIG. 1. Details are not described herein again.

It should be understood that the terminal device, the access network device, the SMF, the PCF, and other network elements shown in FIG. 1 are merely names, and the names do not constitute a limitation on the devices. In a 5G network and another network in the future, network elements corresponding to the terminal device, the access network device, the SMF, the PCF, and the like may also be expressed with other names. This is not specifically limited in embodiments of this application.

It should be understood that, the foregoing communications systems are described by using 5G systems as an example. Certainly, this application is also applicable to another 3GPP communications system, for example, a 4G communications system, or a future 3GPP communications system, which is not limited in embodiments of this application.

It should be understood that all or some of functions of the communications device in this application may alternatively be implemented by software functions running on hardware, or by virtualization functions instantiated on a platform (for example, a cloud platform).

It should be understood that the system architecture described in embodiments of this application is intended to describe the technical solutions in embodiments of this application more clearly, and does not constitute any limitation on the technical solutions provided in embodiments of this application. It may be learned by a person skilled in the art that, with evolution of a network architecture, embodiments of this application may also be applicable to similar technical problems.

### Neural network

In recent years, artificial intelligence (artificial intelligence, AI) research, represented by a neural network, has made great achievements in many fields, and will also play an important role in people's production and life for a long time. Common neural networks include a convolutional neural network (convolutional neural network, CNN), a recurrent neural network (recurrent neural network, RNN), a deep neural network (deep neural network, DNN), and the like.

With reference to FIG. 2, the following describes a neural network to which embodiments of this application are applicable. Layers of the neural network shown in FIG. 2 may be classified into three types according to locations of different layers: an input layer 210, a hidden layer 220, and an output layer 220. Generally, the first layer is the input layer 210, the last layer is the output layer 220, and the middle layers between the first layer and the last layer are the hidden layers 220.

The input layer 210 is configured to input data. The input data may be, for example, a received signal received by a receiver. The hidden layer 220 is configured to process the input data, for example, perform decompression processing on a received signal. The output layer 220 is configured to output processed output data, for example, output a decompressed signal.

As shown in FIG. 2, the neural network includes a plurality of layers, and each layer includes a plurality of neurons. Neurons between the layers may be fully connected, or may be partially connected. For connected neurons, output of neurons of an upper layer may be used as input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. In theory, a model with a larger quantity of parameters has higher complexity and a larger "capacity", which means that the model can complete more complex learning tasks. This neural network model is widely used in pattern recognition, signal processing, optimization combination, anomaly detection, and the like.

A CNN is a deep neural network with a convolutional structure. As shown in FIG. 3, the structure of the CNN may include an input layer 310, convolutional layers 320, pooling layers 330, a full connection layer 330, and an output layer 350.

Each convolutional layer 320 may include a plurality of convolutional operators, and a convolutional operator is also referred to as a kernel. A function of the convolutional operator may be considered as a filter for extracting specific information from an input signal. The convolutional operator may essentially be a weight matrix, and the weight matrix is generally pre-defined.

Weight values in these weight matrices are obtained through a large amount of training in actual application. Each weight matrix formed by the weight values obtained through training may extract information from an input signal, to assist the CNN in performing correct prediction.

When the CNN has a plurality of convolutional layers, an initial convolutional layer usually extracts more general features, and the general features may also be referred to as lower-level features. As a depth of the CNN increases, features extracted by subsequent convolutional layers are increasingly complex.

For the pooling layers 330, as a quantity of training parameters is often required to be reduced, a pooling layer is often periodically introduced behind the convolutional layer. For example, as shown in FIG. 3, one pooling layer may follow one convolutional layer, or one or more pooling layers may follow a plurality of convolutional layers. In a signal processing process, the only purpose of the pooling layer is to reduce a size of space occupied by extracted information.

For the full connection layer 330, after the processing of the convolutional layers 320 and the pooling layers 330, it is still insufficient for the CNN to output required output information. As mentioned above, the convolutional layers 320 and the pooling layers 330 only extract features and reduce parameters brought by the input data. To generate the final output information (for example, a bitstream of original information transmitted by a transmit end), the CNN is required to use the full connection layer 330. Generally, the full connection layer 330 may include a plurality of hidden layers. Parameters included in the plurality of hidden layers may be obtained by performing pre-training according to related training data of a specific task type. For example, the task type may include decoding a data signal received by a receiver, and for another example, the task type may alternatively include performing channel estimation based on a pilot signal received by the receiver.

Behind the plurality of hidden layers in the full connection layer 330, that is, the last layer of the entire CNN is the output layer 350, which is configured to output a result. Generally, a loss function (for example, a loss function similar to a classification cross entropy) is set for the output layer 350, to calculate a prediction error, or in other words, to evaluate a degree of difference between the result (also referred to as a predicted value) output by the CNN model and an ideal result (also referred to as a true value).

### Wireless communication based on an AI model

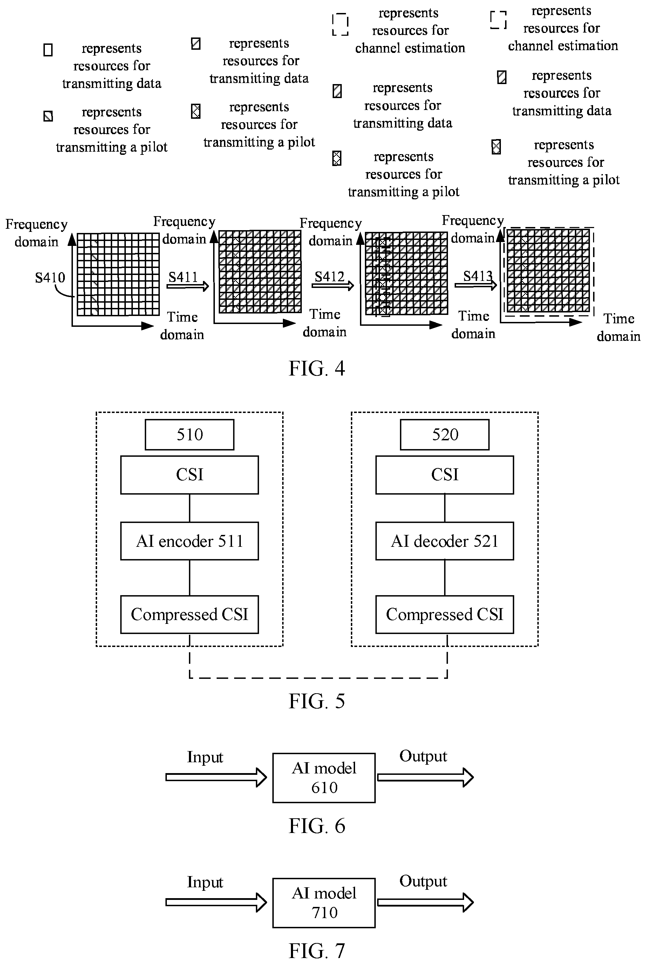

With the development of AI technologies, AI models are introduced into an increasing quantity of communication processes. For example, the purpose of the R18 RAN1 project (RP-212708) is to study AI-enabled wireless air interface technologies. For ease of understanding, the following describes, with reference to FIG. 4 to FIG. 7, an AI model used in a communication process.

FIG. 4 is a schematic diagram of channel estimation and signal recovery to which embodiments of this application are applicable. Due to complexity and a time-varying characteristic of a wireless channel environment, in a wireless communications system (for example, the wireless communications system described above), a receiver is required to recover a received signal based on a channel estimation result.

As shown in FIG. 4, in step S410, in addition to transmitting a data signal on time-frequency resources, a transmitter also transmits a series of pilot signals known to the receiver, such as a channel state information-reference signal (channel state information-reference signal, CSI-RS) and a demodulation reference signal (demodulation reference signal, DMRS).

In step S411, the transmitter transmits the data signal and the pilot signals to the transmitter by using a channel.

In step S412, after receiving the pilot signals, the receiver may perform channel estimation. In a possible implementation, the receiver may estimate, based on a pre-stored pilot sequence and a received pilot sequence by using a channel estimation algorithm (for example, least squares (least squares method, LS) channel estimation), channel information of the channel used for transmitting the pilot signals.

In step S413, the receiver may recover, based on the channel information of the channel used for transmitting the pilot sequence, channel information on full time-frequency resources by using an interpolation algorithm, and the recovered channel information may be used for subsequent channel state information CSI feedback or data recovery.

FIG. 5 is a schematic diagram of a CSI feedback system, based on an AI model, to which embodiments of this application are applicable. In a wireless communications system, channel feature extraction and feedback are mainly implemented by using a codebook-based scheme, that is, after performing channel estimation, the receiver selects, from a preset precoding codebook based on a channel estimation result and according to an optimization criterion, a precoding matrix best matches a current channel, and feeds back precoding matrix index (precoding matrix index, PMI) information to the transmitter via an air-interface feedback link, for the transmitter to implement precoding. In some implementations, the receiver may also feed back a measured channel quality indication (channel quality indication, CQI) to the transmitter, for the transmitter to implement adaptive modulation and coding.

As shown in FIG. 5, the feedback system includes an AI encoder 511 of an auto-encoder and an AI decoder 521 portion. The AI encoder 511 is deployed at the transmitter 510, and the AI decoder 521 is deployed at the receiver 520. The transmitter 510 compresses and encodes to-be-transmitted CSI by using the AI encoder 511, to obtain compressed CSI. Then, the compressed CSI is fed back to the receiver 520 via a feedback link, and the receiver 520 decodes the compressed CSI by using the AI decoder 521, to obtain recovered CSI. In this way, communication overheads for CSI feedback may be reduced without affecting CSI transmission accuracy.

FIG. 6 is a schematic diagram of a positioning scheme, based on an AI model, to which embodiments of this application are applicable. In wireless positioning in a cellular network, straight-line propagation of electromagnetic waves between a network device and a terminal device is referred to as line-of-sight (line of sight, LOS) wireless propagation. In some cases, non-straight-line propagation of electromagnetic wave signals due to obstructions of buildings or trees is generally referred to as non-line-of-sight (non line of sight, NLOS) wireless propagation. Conventional positioning algorithms, such as time difference of arrival (time difference of arrival, TDOA) and angle-of-arrival (angle-of-arrival, AOA), are based on LOS channels, and no longer applicable in environments with mostly NLOS channels. However, in most scenarios, there is generally a small quantity of network devices with LOS channels to terminal devices, causing precision of the conventional positioning algorithms to fail to meet a requirement for high-precision positioning. In addition, there may also be some non-ideal factors in an actual system, which may reduce positioning precision.

Therefore, a high-precision positioning scheme based on an AI model in a scenario where LOS channels and NLOS channels coexist is provided. Some existing research results have shown that, training a model based on a large amount of channel data by using a machine learning method to explore a mapping relationship between channel responses and location coordinates may solve a problem that the conventional positioning algorithms cannot be applied in the scenario where LOS channels and NLOS channels coexist, thereby improving positioning precision.

Referring to FIG. 6, in a positioning scheme implemented based on an AI model 610 in a scenario where LOS channels and NLOS channels coexist, a channel response may be used as input of the AI model 610, and location coordinates may be used as output of the AI model 610. An intrinsic relationship between a wireless channel and a location of a terminal device is learned by using the AI model 610, so that high-precision location coordinates of the terminal device may also be output by using the positioning scheme based on the AI model 610, even in scenarios where there are not enough LOS channels and/or non-ideal conditions exist, thereby helping meet a requirement for high-precision positioning.

FIG. 7 is a schematic diagram of a beam management scheme, based on an AI model, to which embodiments of this application are applicable. In a conventional beam selection process, it is typically necessary to traverse all combinations of receive beams and transmit beams to select a suitable beam. However, it takes a relatively long time to traverse all the combinations, resulting in relatively low efficiency of beam selection. Therefore, beam management based on an AI model is proposed in R18.

Referring to FIG. 7, in a prediction phase, input of an AI model 710 may include a link quality measurement result (for example, an L1 measurement quantity) corresponding to a beam in a beam set A, and a prediction result output by the AI model 710 may include a target beam selected from the beam set A and link quality corresponding to the target beam.

In some implementations, the target beam may include one or more beams. For example, the target beam includes one beam. In this case, the target beam may be an optimal beam or a good beam in the beam set A. For example, the target beam includes a plurality of beams. In this case, the target beam may include a plurality of beams in the beam set A that meet a requirement, where a beam meeting the requirement may be understood as: link quality corresponding to the beam meets the requirement, for example, the link quality corresponding to the beam is greater than or equal to a threshold.

In some other implementations, the target beam may include one or more beam pairs, where each beam pair may include a receive beam or a transmit beam. For example, the target beam is one beam pair. In this case, the target beam may be an optimal beam pair or a good beam pair in the beam set A. For example, the target beam includes a plurality of beam pairs. In this case, the target beam may include a plurality of beam pairs in the beam set A that meet a requirement, where a beam pair meeting the requirement may be understood as: link quality corresponding to the beam pair meets the requirement, for example, the link quality corresponding to the beam pair is greater than or equal to a threshold.

It should be noted that the link quality in embodiments of this application may be determined by using one or more measurement quantities described above. Certainly, link quality in embodiments of this application may be determined based on another measurement quantity in a future communications system, which is not limited in embodiments of this application.

In addition, the link quality described above being determined based on one or more measurement quantities may be understood as that the link quality is obtained by processing the one or more measurement quantities. Certainly, the link quality may alternatively be a measurement quantity. This is not limited in embodiments of this application.

At present, on the basis of the above AI model use cases, the RAN2 working group is focusing on life cycle management of AI models. Life cycle management of the AI model may include aspects such as model generation, model deployment, model transmission, model monitoring, and model update. In current discussions, an AI model may be generated in a core network or a third-party server. In this scenario, if after the AI model is deployed on a terminal device, the third-party server or the core network is required to monitor an operation effect of the AI model in the terminal device in real time, so as to update the model in a timely manner, thereby ensuring efficient operation of the communications system.

It should be noted that the foregoing description is provided by using an AI model as an example. In embodiments of this application, a model involved may alternatively be another model, for example, a machine learning (machine learning, ML) model.

### Federated learning (federated learning, FL)

To generate an AI model that better meets a user requirement, the AI model is required to be trained based on user data from more dimensions. Currently, user data is typically distributed on various nodes such as a terminal, an access network device, a core network device, and a third-party application server (which generally refers to a server that uses a network of an operator, while a service is provided by a third party other than the operator, also referred to as an "OTT (over the top) application server"). If model training can be performed using combined different feature data of a same user on the various nodes, effects of the model may be greatly improved, which is of significant importance for model training. However, sharing user data among a plurality of nodes may cause privacy leakage of users. Therefore, vertical federated learning (vertical federated learning, VFL) has emerged. Vertical federated learning is intended to efficiently and accurately use user data on a plurality of nodes under the premise of satisfying requirements for user privacy, data security, and data governance. In other words, data silos are broken down, and data sharing among a plurality of nodes is achieved under the premise of ensuring privacy and security. Generally, the above nodes are located in different domains. Therefore, data sharing among a plurality of nodes may also be referred to as cross-domain data sharing.

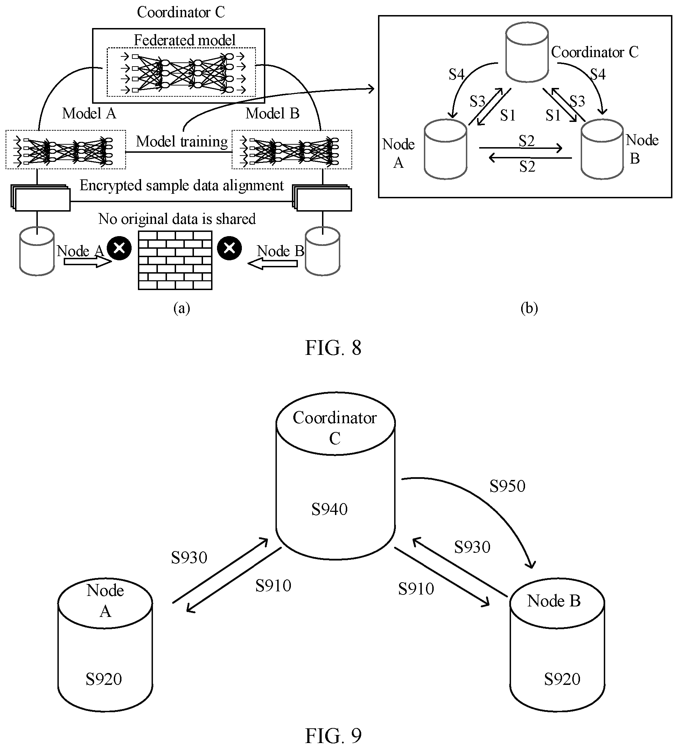

For ease of understanding, vertical federated learning to which embodiments of this application are applicable is described below with reference to FIG. 8 and FIG. 9. Referring to FIG. 8 and FIG. 9, vertical federated learning is generally applicable to a federated learning scenario where participants (for example, a node A and a node B) have data sets containing the same sample space but different feature spaces. Vertical federated learning may also be understood as federated learning classified by features.

Assuming that the node A and the node B are intended to collaboratively train a model (for example, a model A and/or a model B), due to user privacy and data security requirements, the node A and the node B cannot directly exchange data with each other. Therefore, a third-party coordinator C is required to be introduced. The coordinator C may be a semi-honest third party. The coordinator C is independent of the node A and the node B, and is mainly used to assist the node A and the node B in performing secure federated learning. The coordinator C collects intermediate results of the model A and the model B during model training, calculates gradients and loss values, and then forwards calculation results to the node A and the node B, so that the node A and the node B train their respective models. Information received by the coordinator C from the node A and the node B is encrypted or obfuscated, such that original data of each party is not exposed to the other party. In addition, each node in the node A and the node B receives only model parameters related to features that the node has.

FIG. 8 is a schematic diagram of a training process of vertical federated learning to which embodiments of this application are applicable. Referring to FIG. 8, a training process of vertical federated learning generally includes two parts: a first part, which is aligning encrypted sample data that have a same ID but are distributed on different participants, and a second part, which is performing model training based on the aligned encrypted sample data.

In the first part, encrypted sample data are aligned. Since sample data in the node A and the node B may correspond to different users, the system may use an encrypt-based user ID alignment technique, to ensure that the node A and the node B may align their common users without exposing respective original data of the node A and the node B. During alignment of encrypted samples, the system does not expose users belonging to any one of the nodes.

In the second part, model training is performed based on the aligned encrypted sample data. This step may include steps S1 to S4.

Referring to (b) in FIG. 8, in step S1, the coordinator C transmits a public key to the node A and the node B. The public key is used to encrypt sample data that is required to be transmitted. In some implementations, an encryption method may include homomorphic encryption. In other words, homomorphic encryption of sample data m1 and sample data m2 is equivalent to homomorphic encryption of m1 added with homomorphic encryption of m2. Homomorphic encryption of a sample m multiplied by a constant is equivalent to multiplying homomorphic encryption of the sample by the constant.

In step S2, the node A and the node B exchange intermediate results with each other. Generally, a party that has sample labels is an active party and a requesting party, for example, the node B. The node A is a data provider (that is, a passive party), and the node does not have a label of sample data. Each of the node A and the node B performs calculations by using local data to obtain an intermediate result of the model. The node A encrypts the intermediate result and transmits the encrypted intermediate result to the node B. The node B calculates an overall output error of the model based on a label on the node B, a model output result of the node A, and a model output result of the node B, encrypts the output error, and transmits the encrypted output error to the node A.

In step S3, gradients and losses are calculated. The node A and the node B calculate, based on the output error, respective encrypted gradients, and add masks to the encrypted gradients before transmitting them to the coordinator C. In addition, the node B may further calculate a loss, and encrypt the loss and transmit the encrypted loss to the coordinator C.

In step S4, the model is updated. The coordinator C may decrypt the gradients and the losses, and transmit results back to the node A and the node B, respectively. After removing the masks, the node A and the node B may update the model based on the gradients and losses.

FIG. 9 is a schematic diagram of an inference process of vertical federated learning to which embodiments of this application are applicable. Referring to FIG. 9, the inference process may include steps S910 to S940.

In step S910, the coordinator C may transmit a model inference request to each of the node A and the node B, to request the node A and the node B to perform model inference. The model inference request may further indicate a model required to be used by the node A and the node B.

In step S920, the node A and the node B input their respective local data into their respective deployed models to perform model inference, so as to obtain intermediate results.

In step S930, the node A and the node B encrypt their respective intermediate results and transmit the encrypted intermediate results to the coordinator C.

In step S940, the coordinator C aggregates the intermediate results transmitted by the node A and the node B, and inputs an aggregated intermediate result into a local model to perform model inference, to obtain an inference result 1. Since the intermediate results are respectively encrypted by the node A and the node B before being transmitted, after obtaining the inference result 1, the coordinator C decrypts the inference result 1 to obtain an inference result 2.

In step S950, the coordinator C transmits the inference result 2 to the node B.

### Transfer learning

As an important branch of machine learning, transfer learning may allow models and knowledge acquired by learning in an old domain (also referred to as a "source domain") to be applied to a related new domain (also referred to as a "target domain") by leveraging similarities among data, tasks, or models. Currently, transfer learning may be classified based on learning approaches into sample-weight-based transfer, feature-transformation-based transfer, and model-pretraining-based transfer. In sample-based transfer, knowledge transfer may be achieved by weighted usage of labeled samples in the source domain. In feature-based transfer, knowledge transfer may be achieved by mapping the source domain and the target domain to another space and minimizing a distance between the source domain and the target domain. In model-pretraining-based transfer, knowledge transfer may be achieved by performing fine adjustment on a model trained in the source domain, in the target domain by using samples in the target domain.

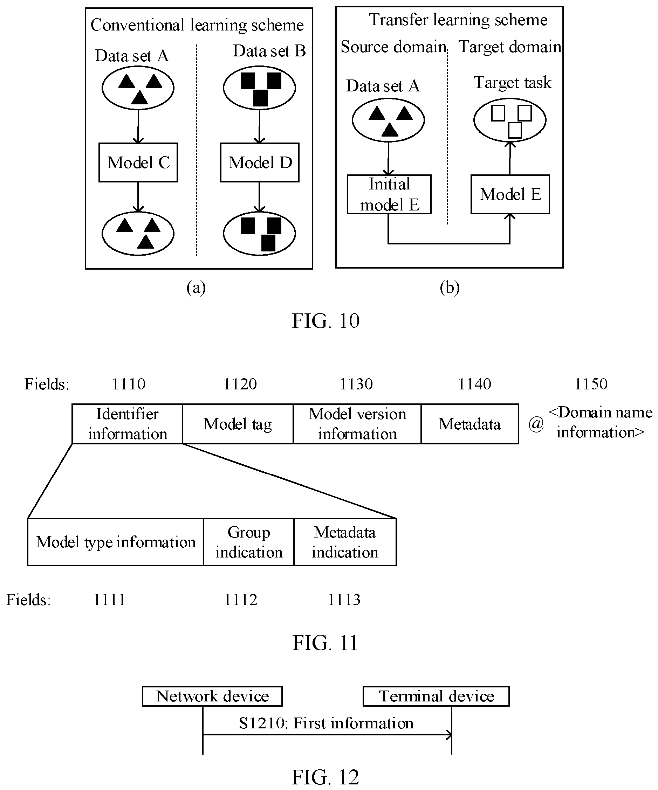

FIG. 10 is a diagram of a conventional learning scheme and a transfer learning scheme for comparison. Referring to (a) in FIG. 10, in a conventional learning scheme, a model C and a model D are trained within respective domains based on respective data sets. For example, the model C may be trained based on a data set A, and the model D may be trained based on a data set B. The trained model C and the trained model D are applied to their corresponding domains. Referring to (b) in FIG. 10, in transfer learning, an initial model E is obtained through training in the source domain. Through the transfer learning method described above, a trained model E is obtained by performing transfer training on the initial model E, such that the model E is also applicable in the target domain, and then model inference is performed in the target domain.

Generally, transfer learning requires a specific degree of similarity between the source domain and the target domain. If the similarity is insufficient, a transfer result may be unsatisfactory, and negative transfer problem may even occur. Therefore, ensuring a degree of similarity between the source domain and the target domain as high as possible is an important prerequisite for transfer learning.

As described above, with the development of technologies, models have been introduced into many communication processes. In a model-based wireless communication process, a plurality of communications devices may be involved, and it is generally required to communicate, among the plurality of communications devices, which model is to be used. For example, in the federated learning scenario described above, the coordinator C is required to transmit a model inference request to each of the communications device A and the communications device B, and the model inference request is further required to indicate a model to be used by the communications device A and the communications device B. For another example, in a process of managing models, it is also required to indicate which model is a managed model. However, how to indicate a model among communications devices has not been addressed in current protocol discussions. Therefore, how to indicate a model among communications devices is a problem that is required to be urgently solved.

For the foregoing problem, an embodiment of this application provides a manner of defining a model identifier. In some implementations, the first model identifier of the first model may include the second information and/or the third information. It should be understood that the first model may be an AI model, for example, may be any AI model described above, and certainly, may alternatively be a new AI model to be introduced in a future communications system. Alternatively, the first model may be an ML model.

In embodiments of this application, a manner of defining the first model identifier is introduced. In this way, communications devices in a communications system may interact with each other by using the first model identifier. Compared with a conventional solution not defining the first model identifier, the solution provided in embodiments this application helps unify understanding of the first model identifier among the various communications devices in the communications system, thereby improving communication efficiency of the communications system.

In addition, since the first model identifier includes the second information and/or the third information, the communications device may learn, based on the second information, information associated with the first model, and/or may learn, based on the third information, information associated with a provider of the first model. This helps the communications device understand the first model based on the first model identifier, thereby properly using the first model, and improving usage performance of the first model.

For example, the first model identifier includes the second information. In some implementations, the second information is associated with the first model. For example, the second information includes one or more of fourth information, fifth information, sixth information, or seventh information.

In some implementations, the fourth information includes the information about the first model identifier. Therefore, the fourth information may also be referred to as "identifier information (ID information)", and accordingly, a field carrying the fourth information may be referred to as an "identifier information field".

In some implementations, the information about the first model identifier includes one or more of the following: content of the first model identifier; information of an identifier type of the first model identifier; information used to indicate whether the first model identifier corresponds to one model or to a plurality of models; or information used to indicate whether the content of the first model identifier is determined based on an identifier of a first network slice associated with the first model.

In some implementations, the content of the first model identifier may include a string and/or a number. In some scenarios, the content of the first model identifier may be referred to as a "model tag (model tag)".

In embodiments of this application, a manner of defining the content of the first model identifier is not limited. In some implementations, the content of the first model identifier may be defined by a provider of the first model. Generally, to better distinguish between different models provided by the provider, the content of the first model identifier is unique among the plurality of models provided by the provider. In some scenarios, the provider may register a domain name with a domain name registration authority to ensure global uniqueness of the domain name. For a provider that has registered a domain name, the content of the first model identifier is unique within a domain corresponding to the provider. In some other implementations, if the first model is associated with the first network slice, the content of the first model identifier may be determined based on the identifier of the first network slice. The identifier of the first network slice may include, for example, single-network slice selection assistance information (single-network slice selection assistance information, S-NSSAI) and/or a slice service type (slice service type, SST).

In embodiments of this application, the provider of the first model is not limited. For example, the provider of the first model may be an organization that generates the first model. For another example, the provider of the first model may be an organization that updates the first model. For another example, the provider of the first model may be an organization that trains the first model.

In embodiments of this application, a manner of determining the content of the first model identifier based on the identifier of the first network slice is not specifically limited. In some implementations, determining the content of the first model identifier based on the identifier of the first network slice may include the content of the first model identifier being the identifier of the first network slice. In some other implementations, determining the content of the first model identifier based on the identifier of the first network slice may include the content of the first model identifier being obtained by processing the identifier of the first network slice. For example, the content of the first model identifier may include part of bits of the identifier of the first network slice. For another example, the content of the first model identifier may include the identifier of the first network slice that is obtained by a cyclic shift. The above processing manners are not limited in embodiments of this application.

In addition, in embodiments of this application, a length of the content of the first model identifier is not limited. For example, the length of the content of the first model identifier may be 256 bits.

In some implementations, the information about the identifier type of the first model is used to indicate one of the following: the identifier type of the first model identifier being a logical identifier; or the identifier type of the first model identifier being a physical identifier.

In some implementations, the logical identifier may be associated with a model function. For example, models corresponding to a same model function may correspond to a same logical identifier. For example, if both a model 1 and a model 2 are models used for positioning, the model 1 and the model 2 may correspond to a same logical identifier.

In embodiments of this application, an association relationship between the physical identifier of the first model and the logical identifier of the first model is not limited. For example, the logical identifier of the first model may be associated with physical identifiers of a plurality of models, where the plurality of models include the first model. For another example, the logical identifier of the first model may be associated with a physical identifier of a single model, and the model is the first model. In other words, the logical identifier of the first model is in a one-to-one correspondence with the physical identifier of the first model.

In embodiments of this application, the length of the identifier type is not limited. For example, the length of the identifier type may be 6 bits.

In some implementations, the above information used to indicate whether the first model identifier corresponds to one model or to a plurality of models may also be referred to as a "group indication". In other words, the group indication is used to indicate whether the first model identifier corresponds to a single model or a group of models, where the group of models may include the first model.

In some implementations, if a value of the group indication is a first value, it indicates that the first model identifier corresponds to a group of models. If the value of the group indication is a second value, it indicates that the first model identifier corresponds to a single model. The first value and the second value may be different values. For example, the first value may be 1, and the second value may be 0. For another example, the first value may be 0, and the second value may be 1.

In embodiments of this application, a length of the group indication is not limited. For example, the length of the group indication may be 1 bit, which helps reduce transmission overheads for the group indication.

In some implementations, the information described above is used to indicate whether the content of the first model identifier is determined based on the identifier of the first network slice. As described above, in some scenarios, the content of the first model identifier may be determined based on the identifier of the first network slice. In some other scenarios, the content of the first model identifier may not be determined based on the identifier of the first network slice. Therefore, in embodiments of this application, whether the content of the first model identifier is determined based on the identifier of the first network slice may be indicated by the information described above.

In embodiments of this application, a field carrying the information described above in the first model identifier is not limited. In some implementations, the information described above may be in the same field as a field in which the type of the first model identifier is located, which helps reduce a quantity of fields included in the first model identifier, thereby reducing overheads for transmitting the first model identifier. The first model identifier in embodiments of this application is described below with reference to FIG. 11. Certainly, in embodiments of this application, the information described above may be carried in a dedicated field in the first model identifier.

In some implementations, the fifth information includes model version information of the first model, which helps the communications devices determine, based on the fifth information, whether to update the first model. Generally, during evolution of the model, the model is updated a plurality of times to improve performance of the model. Therefore, a model may have a plurality of versions, and thus the fifth information may be used to indicate the model version information of the first model.

In embodiments of this application, a length of the fifth information is not limited. For example, the length of the fifth information may be 32 bits.

In some implementations, the sixth information includes metadata (metadata) of the first model, where the metadata of the first model is used to indicate one or more of the following: model information of the first model; a model function of the first model; a model management operation supported by the first model; a first mapping relationship; or a second mapping relationship.

In some implementations, the metadata of the first model is used to indicate the model information of the first model, or in other words, the metadata of the first model is used to describe the model information of the first model.

In some implementations, the model information of the first model may include one or more of the following: model performance of the first model, accuracy of model inference performed by the first model, a format of a data set used for training the first model, a format of input data of the first model, or a format of output data of the first model.

In some implementations, the metadata of the first model is used to indicate the model function of the first model, or in other words, the metadata of the first model is used to describe the model function of the first model.

In some implementations, the model function of the first model may include one or more of the following: providing a positioning function; providing a CSI feedback function; beam management; providing a transfer learning function; or providing a federated learning function (for example, providing a vertical federated learning function).

In some implementations, the metadata of the first model is used to indicate the model management operation supported by the first model, or in other words, the metadata of the first model is used to describe the model management operation supported by the first model.

In some implementations, the model management operation described above is used to manage the model during a life cycle of the model. For example, the model management operation supported by the first model may include one or more of the following: a selection operation for the first model; an activation operation for the first model; a deactivation operation for the first model; a model switching operation for the first model. The selection operation for the first model may be, for example, understood as selecting the first model for use or execution through the model selection operation. The model switching operation for the first model may include, for example, switching from the first model to another model through the model switching operation, or switching from another model to the first model through the model switching operation.

In some implementations, the first mapping relationship is a mapping relationship between the first model identifier of the first model and a second model identifier of the first model, where the second model identifier is an external model identifier used external to the communications system, and the first model identifier is an internal identifier used within the communications system. Accordingly, the metadata of the first model is used to indicate the first mapping relation, or in other words, the first model may be used to describe the first mapping relationship.

In some scenarios, a vendor providing the first model may be a third party. The second model identifier of the first model provided by the third party may not comply with rules for defining model identifiers in the communications system. In this case, the second model identifier may be referred to as an external identifier. In such scenarios, a first mapping relationship may be established to convert the second model identifier into the first model identifier, thereby simplifying a model identifier conversion process.

In some scenarios, when the third party provides the first model, in addition to providing the second model identifier, the third party may also provide the metadata of the first model. In this case, the first model identifier of the first model may be determined based on the metadata of the first model, to establish a mapping relationship between the first model identifier and the second model identifier.

In some implementations, the second mapping relationship may be a mapping relationship between the first model identifier of the first model and a model file of the first model. Accordingly, the metadata of the first model is used to indicate the model file of the first model, or in other words, the first model may be used to describe the model file of the first model.

In embodiments of this application, the communications device may determine, based on the first model identifier and the second mapping relationship, the model file of the first model that is associated with the first model identifier. Accordingly, the communications device may use the first model based on the model file of the first model, which helps properly use the first model to improve the performance of the first model.

In some implementations, the model file of the first model is used to describe a manner of using the first model. In some implementations, the model file of the first model includes one or more of the following: a usage duration limit of the first model, a usage location limit of the first model, or a usage scenario limit of the first model.

Generally, communication conditions in a communications system change over time. In this case, if communication has been performed based on the first model for a long time period, model inference accuracy of the first model may decrease. Therefore, usage duration of the first model may be limited by the usage duration limit of the first model. For example, if the usage duration of the first model reaches duration corresponding to the usage duration limit, the first model may be deactivated. For another example, if the usage duration of the first model reaches the duration corresponding to the usage duration limit, the first model may be updated.

Generally, communication conditions in a communications system change according to a location of communication performed a communications device. It is assumed that a data set used for training the first model corresponds to communication data at a first location. In this case, if communication is performed at another location by using the first model, the model inference accuracy of the first model may decrease. Therefore, the usage location of the first model may be limited by the usage location limit of the first model. For example, in a case in which an actual usage location of the first model matches the usage location limit, the first model may be used. Assuming that the usage location limit indicates that the usage location of the first model is a location 1, an actual usage location of the first model matching the usage location limit may include the actual usage location of the first model being the scenario 1.

In embodiments of this application, the usage location is not specifically limited. For example, the usage location may include one or more of the following: a frequency domain location where the first model is used; a time domain location where the first model is used; or a geographic location where the first model is used.

Generally, communication conditions differ significantly in different communication scenarios. It is assumed that a data set used for training the first model primarily includes communication data associated with an indoor communication scenario. In this case, if communication is performed in an outdoor communication scenario based on the first model, the model inference accuracy of the first model may decrease. Therefore, the usage scenario of the first model may be limited by the usage scenario limit of the first model. For example, in a case in which an actual usage scenario of the first model matches the usage scenario limit, the first model may be used. Assuming that the usage scenario limit indicates that the usage scenario of the first model is a scenario 1, the actual usage scenario of the first model matching the usage scenario limit may include the actual usage scenario of the first model being the scenario 1.

In some implementations, the seventh information is used to indicate whether the metadata of the first model is carried in the first model identifier, which helps simplify complexity of decoding the first model identifier at a receiving end of the first model identifier, where the receiving end may be a terminal device or a network device. Therefore, the seventh information may also be referred to as a "metadata indication".

In some implementations, if a value of the seventh information is a first value, it indicates that the metadata of the first model is carried in the first model identifier. If the value of the seventh information is a second value, it indicates that the metadata of the first model is not carried in the first model identifier. The first value is different from the second value. For example, the first value may be 0, and the second value may be 1. For another example, the first value may be 1, and the second value may be 0.

In embodiments of this application, a length of the seventh information is not limited. For example, the length of the seventh information may be 1 bit, which helps reduce transmission overheads for the seventh information.

For example, the first model identifier includes the third information. In some implementations, the third information is associated with the provider of the first model.

In embodiments of this application, the provider of the first model is not limited. For example, the provider of the first model may be an organization that generates the first model. For another example, the provider of the first model may be an organization that updates the first model. For another example, the provider of the first model may be an organization that trains the first model.

In some implementations, the third information includes domain name information corresponding to the provider of the first model. Generally, the provider may register a domain name associated with the provider with a domain name registration authority, so as to ensure global uniqueness of the domain name. Therefore, the domain name information described above may be used to indicate the provider of the first model, or the domain name information described above may be used to indicate that the model identifier content in the first model identifier is defined by the provider corresponding to the domain name information.

In embodiments of this application, a manner of connection between the second information and the third information is not limited. For example, the second information and the third information may be connected by using a symbol "@". For details, reference may be made to related description given below with reference to FIG. 11. For another example, the second information and the third information may be directly connected without including any symbol therebetween.

As described above, the second information may include one or more of the fourth information, the fifth information, the sixth information, or the seventh information described above, which is not limited in the embodiments of this application. For example, the second information may include only the fourth information and the fifth information, which helps reduce transmission overheads for the second information. In this scenario, if the second information does not carry the metadata of the first model (namely, the sixth information), the receiving end may pre-configure the metadata of the first model, so as to understand the first model based on the metadata. For another example, the second information may include only the fourth information, which helps reduce transmission overheads for the second information. In this scenario, if the second information does not include the model version information of the first model, it may be understood that a plurality of model versions of the first model all correspond to the first model identifier. In this case, the model version of the first model may be transmitted by using other information. For another example, the second information may include only all of the information described above, which helps the communications device better understand the first model, for example, understanding model functions of the first model, or for another example, understanding usage conditions of the first model, so as to improve the model inference accuracy of the first model.

In addition, in embodiments of this application, fields carrying the one or more types of information described above in the first model identifier are not limited. For example, the first model identifier may include five fields. Information in the fourth information other than the content of the model identifier and the seventh information may be carried in one field, the content of the model identifier, the fifth information may be carried in one field, the sixth information may be carried in one field, and the third information may be carried in one field. Certainly, in embodiments of this application, the first model identifier may include two fields, respectively carrying the second information and the third information.

For ease of understanding, the first model identifier is described below by using an example in which the first model identifier includes all of the information described above. It should be understood that FIG. 11 is mainly used to illustrate a manner of carrying the information described above. For meanings of the information described above, reference may be made to the foregoing description. For brevity, details are not repeated below.

As shown in FIG. 11, it is assumed that the first model identifier includes fields 1110 to 1150. The field 1110 is used to carry identifier information (ID info) of the first model. The field 1110 may include subfields 1111 to 1113, where the field 1111 is used to carry model type information of the first model, the subfield 1112 is used to carry the group indication, and the subfield 413 is used to carry a metadata indication. The field 1120 is used to carry a model tag of the first model. The field 1130 is used to carry the model version information of the first model. The field 1140 is used to carry the metadata of the first model. The field 1150 is used to carry the domain name information corresponding to the provider of the first model.

The first model identifier provided in embodiments of this application is described above. A usage scenario of the first model identifier provided in embodiments of this application is described below. In some implementations, the first model identifier may be transmitted between a first communications device and a second communications device. In embodiments of this application, at least one of the first communications device or the second communications device is not limited. For example, the first communications device may be a terminal device, and the second communications device may be a network device. For another example, the first communications device may be a network device, and the second communications device may be a terminal device. For another example, the first communications device may be a terminal device, and the second communications device may be a terminal device. For another example, the first communications device may be a network device, and the second communications device may be a network device.

The wireless communication method in embodiments of this application is described below with reference to FIG. 12 by using an example in which the first communications device is a network device and the second communications device is a terminal device. Referring to FIG. 12, in step S1210, the network device transmits first information to the terminal device, where the first information carries the first model identifier.

In embodiments of this application, a function of the first information is not limited. For example, the first information may be used to allocate the first model identifier to the terminal device. For another example, the first information may be used to update the first model identifier for the terminal device. For another example, the first information may be used to indicate the first model by using the first model identifier. For another example, the first information may be used to indicate, by carrying the first model identifier, the first model for model management. For ease of understanding, the following respectively describes, with reference to Embodiment 1 and Embodiment 2, an allocation scheme for the first model identifier and an update scheme for the first model identifier.

### Embodiment 1: allocation scheme for the first model identifier

In some implementations, the first information is used to allocate the first model identifier to the terminal device.

In some implementations, the first information may be transmitted after non-access stratum (non-access stratum, NAS) authentication. Generally, after a core network device completes NAS authentication of the terminal device, information exchanged between an access network device and the terminal device is encrypted and integrity protected. In this case, transmitting the first information helps improve transmission security of the first information.

In some implementations, the first model identifier may be determined by the network device. For example, the network device may determine a model identifier of each model in one or more models based on local information (also referred to as "local configuration information") and/or information associated with the one or more models. In embodiments of this application, the network device is not limited. For example, the network device may be an access network device.

In some implementations, the local information may be used to indicate a quantity of model identifiers that the network device supports allocating to the terminal device.

In some implementations, the information associated with the models described above may be acquired from operation, administration, and maintenance (operation administration and maintenance, OAM). For example, the information associated with the models may include one or more of model version information of models maintained and managed by the OAM, metadata of the models, or model tags of the models. The information associated with the models that is acquired from the OAM may include the model information of the first model.

In some implementations, if the network device is an access network device, the first model may be used for communication between the access network device and the terminal device. For example, the first model may be deployed on the terminal device and used for communication with the access network device. For another example, the first model may be deployed on the access network device and used for communication with the terminal device.

For example, if the network device is an NG-RAN, the NG-RAN may obtain, from the OAM, a plurality of models used for AI positioning managed by the OAM: models 1 to 3, and corresponding model version information of the models 1 to 3. The local information of the NG-RAN is used to indicate that the network device supports allocating a quantity 2 of model identifiers to the terminal device. Accordingly, the NG-RAN generates a model identifier of each model in the models 1 to 3 based on the information acquired from the OAM. For the model identifiers of the models 1 to 3, reference may be made to those shown in FIG. 11. Thereafter, the NG-RAN may configure, for the terminal device, model identifiers of two models in the models 1 to 3 based on the local information.

For another example, the network device may determine a model identifier of each model in one or more models based on pre-configuration information associated with the one or more models. In embodiments of this application, the network device is not limited. In some implementations, the network device may be a core network device. For example, the core network device may include one or more of the following: an AMF, an NWDAF, an NEF, or a UDM. Certainly, in embodiments of this application, the core network device may alternatively be a new core network device to be introduced in a future communications system.

In some implementations, the pre-configuration information described above may be acquired from the OAM and/or the OTT. For example, the pre-configuration information may include one or more of model version information of a model, metadata of the model, or a model tag of the model. Models associated with the pre-configuration information described above may include the first model.

It should be noted that the function of allocating the first model identifier is not limited in embodiments of this application. For example, the network device may instruct, by allocating the first model identifier to the terminal device, the terminal device to execute the first model. For another example, the network device may instruct, by allocating the first model identifier to the terminal device, the terminal device to acquire the first model.

### Embodiment 2: update scheme for the first model identifier

In some implementations, the first information is used to update a model identifier for the terminal device, and the first model identifier is an updated model identifier. Alternatively, the first information is used to indicate that an updated model identifier is the first model identifier.

In embodiments of this application, a reason for updating the model is not limited. For example, if after the first model is updated and the model version information of the first model changes, the network device may update the model identifier of the first model by transmitting the first information to the terminal device. For another example, if a validity period of the first model expires and the first model is required to be deactivated, the network device may update the model identifier by transmitting the first information to the terminal device. For another example, if a model supported by the terminal device changes and the terminal device no longer supports the first model, the network device may update the model identifier by transmitting the first information to the terminal device.

In some implementations, the first model identifier may be determined by the network device. For example, the network device may determine an updated model identifier of each model in one or more models based on local information (also referred to as "local configuration information") and/or information associated with the one or more models. In embodiments of this application, the network device is not limited. For example, the network device may be an access network device.

In some implementations, if the network device is an access network device, the first model may be used for communication between the access network device and the terminal device. For example, the first model may be deployed on the terminal device and used for communication with the access network device. For another example, the first model may be deployed on the access network device and used for communication with the terminal device.

For example, if the network device is an NG-RAN, the NG-RAN may obtain, from the OAM, a plurality of models used for AI positioning, such as models 1 to 3, and corresponding updated model version information of the models 1 to 3. The local information of the NG-RAN is used to indicate that the network device supports allocating a quantity 2 of model identifiers to the terminal device. Accordingly, the NG-RAN updates a model identifier of each model in the models 1 to 3 based on the information acquired from the OAM. For the model identifiers of the models 1 to 3, reference may be made to those shown in FIG. 11. Thereafter, the NG-RAN may update, for the terminal device, model identifiers of two models in the models 1 to 3 based on the local information.

For another example, the network device may update a model identifier of each model in one or more models based on information associated with the one or more models. In embodiments of this application, the network device is not limited. In some implementations, the network device may be a core network device. For example, the core network device may include one or more of the following: an AMF, an NWDAF, an NEF, or a UDM. Certainly, in embodiments of this application, the core network device may alternatively be a new core network device to be introduced in a future communications system.

In embodiments of this application, a manner of acquiring the information associated with the one or more models is not limited. For example, the information associated with the one or more models described above may be acquired from the OAM. For another example, the information associated with the one or more models described above may be acquired from the OTT. For another example, the information associated with the one or more models described above may be acquired from subscription messages of the terminal device.

In some implementations, the information associated with the one or more models may include one or more of updated model version information, updated metadata, an updated model tag, or information about a model supported by the terminal device, where one or more of the updated model version information, the updated metadata, or the updated model tag may be acquired from the OAM and/or the OTT. The information about the model supported by the terminal device may be acquired from the subscription messages of the terminal device.

The manner of generating the first information in embodiments of this application is described above. A manner of transmitting the first information in embodiments of this application is described below. It should be understood that the first information in any one of the embodiments described above may be applied to the solution described below. For example, the first information described below may include the second information and/or the third information. For brevity, details are not described again below.

In some implementations, the network device is a core network device (also referred to as a "first core network device"). Step S1210 includes: transmitting, by the core network device, the first information to the terminal device, for example, transmitting, by the core network device, the first information to the terminal device by using an access network device.

In some other implementations, the network device is an access network device (also referred to as a "first access network device"). In this case, the access network device may directly transmit the first information to the terminal device.

In some scenarios, the first model identifier transmitted by the network device to the terminal device may not be applicable to the terminal device. For example, a model supported by the terminal device is a model 1, and changes to a model 2 after a period of time. In this case, the network device may not learn that the model supported by the terminal device has changed and may still transmit the model identifier of the model 1 to the terminal device. In this case, the identifier of the model 1 is no longer applicable to the terminal device.

Therefore, for the foregoing problem, in embodiments of this application, the terminal device may transmit first indication information to the network device to indicate whether to accept or reject the first model identifier. In other words, the foregoing method includes: transmitting, by the terminal device, first indication information to the network device, where the first indication information is used to indicate whether the terminal device accepts or rejects the first model identifier.

In some implementations, if the first indication information is used to indicate that the terminal device accepts the first model identifier, the accepted first model identifier may be carried in the first indication information. If the first indication information is used to indicate that the terminal device rejects the first model identifier, the rejected first model identifier may be carried in the first indication information. For example, in a case in which the network device indicates a plurality of model identifiers to the terminal device, the terminal device may notify, by carrying an accepted model identifier in the first indication information, the network device of which model identifier in the plurality of model identifiers is received. Conversely, the terminal device may notify, by carrying a rejected model identifier in the first indication information, the network device of which model identifier in the plurality of model identifiers is rejected.

In embodiments of this application, a manner in which the terminal device determines whether to accept or reject the first model identifier is not limited. In some implementations, the terminal device may determine, based on whether a model function of a model required by the terminal device matches a model function corresponding to the first model identifier, whether to accept or reject the first model identifier. For example, if the model function of the model required by the terminal device matches the model function corresponding to the first model identifier, the terminal device accepts the first model identifier. For another example, if the model function of the model required by the terminal device does not match the model function corresponding to the first model identifier, the terminal device rejects the first model identifier.

In some other implementations, the terminal device may determine, based on whether an input/output format of the model required by the terminal device matches an input/output format corresponding to the first model identifier, whether to accept or reject the first model identifier. For example, if the input/output format of the model required by the terminal device matches the input/output format corresponding to the first model identifier, the terminal device accepts the first model identifier. For another example, if the input/output format of the model required by the terminal device does not match the input/output format corresponding to the first model identifier, the terminal device rejects the first model identifier.

In some implementations, the network device may be an access network device (also referred to as a "second access network device") or a core network device (also referred to as a "second core network device"). If the network device is an access network device, the terminal device may directly transmit the first indication information to the access network device. If the network device is a core network device, the terminal device may transmit the first indication information to the core network device. For example, the terminal device may transmit the first indication information to the core network device by using the access network device.

It should be understood that, the foregoing allocation scheme for the first model identifier and the foregoing update scheme for the first model identifier may be used separately. Certainly, the allocation scheme for the first model identifier and the update scheme for the first model identifier may be used in combination with each other. If the foregoing two schemes are used in combination, as described in Embodiment 1, the network device may first allocate the first model identifier to the terminal device, and as described in Embodiment 2, the network device may then update the model identifier for the terminal device.

It should be noted that, in the foregoing scenario, a meaning of the first model identifier in Embodiment 1 is different from a meaning of the first model identifier in Embodiment 2. The meaning of the first model identifier in Embodiment 1 is a model identifier allocated by the network device to the terminal device, and a meaning of the first model identifier in Embodiment 2 is a model identifier updated by the network device for the terminal device. For ease of differentiation, the first model identifier in Embodiment 1 may be referred to as a model identifier 1, and the first model identifier in Embodiment 2 may be referred to as a model identifier 2. In other words, the network device may first configure the model identifier 1 for the terminal device, and the network device may then update the model identifier for the terminal device from the model identifier 1 to the model identifier 2.

As an increasing quantity of types of terminal devices are introduced into communications systems, different types of terminal devices have different capabilities and support different models. If the network device directly indicates a model identifier to the terminal device without considering a capability of the terminal device, it may result in that the indicated model identifier is not applicable to the terminal device.

Therefore, for the foregoing problem, an embodiment of this application provides a method for reporting capability information of the terminal device, so that the network device may determine the first model identifier based on the capability information of the terminal device, thereby helping improve properness of the first model identifier. In some scenarios, the capability information may also be referred to as an "AI/ML capability". In other words, the method includes: transmitting, by the terminal device, capability information to the network device.

In some implementations, the capability information may be associated with a model supported by the terminal device. For example, the capability information is used to indicate one or more of the following: a model supported by the terminal device; a model management operation supported by the terminal device; or a model function of a model supported by the terminal device.

For example, the capability information is used to indicate the model supported by the terminal device. In this case, the capability information may include a model identifier of the model supported by the terminal device. In some implementations, an information structure of the model identifier of the model supported by the terminal device is based on the information structure corresponding to the first model identifier described above. Certainly, in embodiments of this application, the model identifier may be constructed in another manner.

In some implementations, the model identifier of the model supported by the terminal device may include the first model identifier.

For example, the capability information is used to indicate the model management operation supported by the terminal device. In this case, the model management operation supported by the terminal device includes one or more of the following: a model update operation, a model activation operation, a model deactivation operation, a model switching operation for a model, or a model rollback operation. The model rollback operation may, for example, include rolling back from a model-based communication mode to a non-model-based communication mode (or in other words, a conventional communication mode).

For example, the capability information is used to indicate the model function of the model supported by the terminal device. In this case, the model function may include one or more of the following: providing a positioning function; providing a CSI feedback function; beam management; providing a transfer learning function; or providing a federated learning function (for example, providing a vertical federated learning function).

In some implementations, the capability information may be used to indicate whether the terminal device supports performing model training. Generally, a model training process imposes a relatively high requirement on hardware performance of the terminal device. For example, the terminal device is required to have relatively large storage space to store intermediate calculation results generated during the model training process. For another example, the terminal device is required to have a relatively high data processing capability to perform data calculations during the model training process. Therefore, not all terminal devices support performing model training. In this case, whether the terminal device supports performing model training may be indicated to the network device by using the capability information.

In some implementations, the capability information may be used to indicate whether the terminal device supports performing model inference. Generally, a model inference process imposes a relatively high requirement on hardware performance of the terminal device. For example, the terminal device is required to have relatively large storage space to store intermediate calculation results generated during the model inference process. For another example, the terminal device is required to have a relatively high data processing capability to perform data calculations during the model inference process. Therefore, not all terminal devices support performing model inference. In this case, whether the terminal device supports performing model inference may be indicated to the network device by using the capability information.

In embodiments of this application, content included in the capability information is not limited. In some implementations, the capability information described above may include all of the information described above, which helps improve properness of the network device indicating the first model identifier to the terminal device. In some other implementations, the capability information described above may include part of the information described above, which helps reduce transmission overheads for transmitting the capability information. In some other implementations, the capability information described above may include a model identifier allocated by the network device to the terminal device.

In some implementations, the capability information may be transmitted after the terminal device completes NAS authentication. Generally, after the terminal device completes NAS authentication, information exchange between the terminal device and the access network device is encrypted and integrity protected. In this case, transmitting the capability information helps improve transmission security of the capability information. For example, the capability information may be transmitted during a registration procedure in which the terminal device registers with the core network device (for example, the capability information is carried in a mobility registration request message). Generally, information transmitted in a registration procedure other than an initial registration procedure is encrypted and integrity protected. Therefore, transmitting the capability information helps improve transmission security of the capability information. For another example, the capability information may be carried in an initial context setup response message. For another example, the capability information may be carried in a context setup response message. For another example, the capability information may be carried in a response message for a context update request. The context update request is used to request updating of context of the access network device. Certainly, in embodiments of this application, the capability information may be transmitted in another NAS process.

In some implementations, the network device described above may be a core network device (also referred to as a "third core network device"). In this case, the terminal device transmits the capability information to the third core network device. For example, the terminal device transmits the capability information to the third core network device by using an access network device (also referred to as a "third access network device"). In other words, the terminal device may transmit the capability information to the third access network device. Accordingly, the third access network device transmits the capability information to the third core network device.

In embodiments of this application, a manner of carrying the capability information is not limited. For example, the capability information to be transmitted by the third access network device to the third core network device may be carried in a response message for an initial context setup request.

In some other implementations, the network device is the third access network device. In this case, the terminal device may directly transmit the capability information to the third access network device.

In some implementations, the capability information described above may be requested by the network device. In other words, the method further includes: transmitting, by the network device, a first request to the terminal device, where the first request is used to request the capability information of the terminal device. The transmitting, by the terminal device, the capability information to the network device includes: transmitting, by the terminal device, the capability information to the network device in response to the first request. In other words, the first request is used to request a query for the capability information of the terminal device. Therefore, the first request is also referred to as a "capability query request".

Certainly, in embodiments of this application, the terminal device may actively report the capability information. For example, when the capability information of the terminal device changes, the terminal device actively reports the capability information. For another example, when the terminal device performs mobility registration for the first time, the terminal device may actively report the capability information.

In some implementations, the network device described above is a core network device (also referred to as a "fourth core network device"). Accordingly, the fourth core network device may transmit the first request to the terminal device. For example, the fourth core network device transmits the first request to the terminal device by using an access network device (also referred to as a "fourth access network device").

In some implementations, the first request may be carried in one or more of the following: an initial context setup request; a context setup request; or a context update request. The context update request is used to request updating of context of the access network device. Certainly, in embodiments of this application, a manner of carrying the first request is not limited.

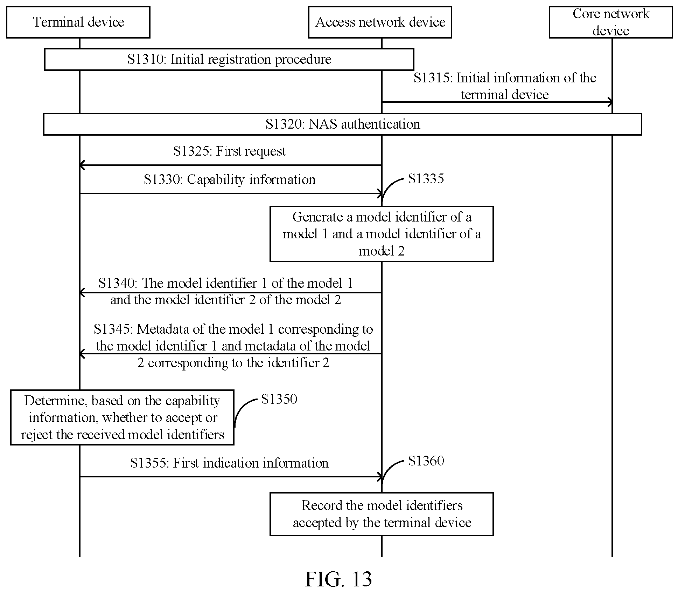

In embodiments of this application, the foregoing allocation scheme for the first model identifier, the foregoing update scheme for the first model identifier, and the foregoing reporting scheme for the capability information may be used separately, or may be used in combination with each other. For ease of understanding, the following describes a method according to an embodiment of this application with reference to FIG. 13 to FIG. 17. It should be understood that, for the first model identifier and related information (for example, the capability information and/or the first request) in the solution described below, reference may be made to the foregoing description. For brevity, details are not described again below.

FIG. 13 is a schematic flowchart of allocation of a first model identifier according to an embodiment of this application. The method illustrated in FIG. 13 includes step S1310 to step S1360. It should be understood that, the method illustrated in FIG. 13 may be applied to an RAN AI scenario. In addition, in the solution shown in FIG. 13, the metadata of the first model may not be transmitted by using the model identifier, but by using information other than the model identifier.

In step S1310, an initial registration procedure is performed between a terminal device and an access network device.

In some implementations, since information transmitted during the initial registration procedure is neither encrypted nor integrity protected, to improve transmission security of capability information, no capability information is carried in messages transmitted during the initial registration procedure.

In step S1315, the access network device transmits initial information of the terminal device to a core network device.

In step S1320, the terminal device completes NAS authentication.

In step S1325, the access network device transmits a first request to the terminal device, where the first request is used to request capability information of the terminal device.

In step S1330, the terminal device transmits the capability information to the access network device in response to the first request.

In step S1335, the access network device generates a model identifier of a model 1 and a model identifier of a model 2.

In some implementations, the access network device may determine, based on information that is associated with a model and that is obtained from OAM, local information, and capability information, that models supported by the terminal device include the model 1 and the model 2, and generate the model identifier 1 of the model 1 and the model identifier of the model 2.

For example, the capability information indicates that the terminal device may support an AI-based positioning function, and the local information indicates that a maximum quantity of model identifiers that the access network device can allocate to the terminal device is 2. Accordingly, the access network device obtains, from the OAM, managed models used for positioning: models 1 to 3, and corresponding model version information of the models 1 to 3. The access network device may generate the model identifier 1 of the model 1 and the model identifier 2 of the model 2.

In step S1340, the access network device transmits the model identifier 1 of the model 1 and the model identifier 2 of the model 2 to the terminal device.

In step S1345, the access network device transmits, to the terminal device, metadata of the model 1 corresponding to the model identifier 1 and metadata of the model 2 corresponding to the identifier 2.

In some implementations, the metadata of the model 1 and the metadata of the model 2 may be determined based on mapping information shown in Table 1. Referring to Table 1, the metadata of the model 1 corresponding to the model identifier 1 includes a model function of the model 1 being a direct positioning function, an input/output format of the model 1 being an input/output format 1, and precision of the model 1 being precision 1. The metadata of the model 2 corresponding to the model identifier 2 includes a model function of the model 2 being a direct positioning function, an input/output format of the model 2 being an input/output format 2, and precision of the model 2 being precision 2.

**Table 1**

| Model identifier | Metadata |
|---|---|
| Model identifier 1 | Direct positioning function, input/output format 1, precision 1 |
| Model identifier 2 | Indirect positioning function, input/output format 2, precision 2 |

It should be noted that, if the model identifier 1 and the model identifier 2 include metadata, the mapping information shown in Table 1 is not required to be additionally transmitted. In this case, the access network device directly transmits the model identifier 1 and the model identifier 2 to the terminal device.

In step S1350, the terminal device determines, based on the capability information, whether to accept or reject the received model identifiers.

In some implementations, it is assumed that the terminal device is required to execute a model having a positioning function. In this case, the terminal device may determine, based on the mapping information described above, metadata of a model associated with a model identifier, and determine, based on a model function described in the metadata, whether the model has a positioning function. Referring to Table 1, the metadata associated with both the model identifier 1 and the model identifier 2 indicates that the corresponding models have a positioning function. In this case, the terminal device may determine to accept the model identifier 1 and the model identifier 2.

In step S1355, the terminal device transmits first indication information to the access network device to indicate that the model identifier 1 and the model identifier 2 are accepted.

In step S1360, the access network device records the model identifiers accepted by the terminal device, that is, the model identifier 1 and the model identifier 2.

In some implementations, the access network device may record the metadata of the models corresponding to the model identifier 1 and the model identifier 2, respectively.

In embodiments of this application, no core network is required, and the access network device may generate and allocate model identifier information. This manner is more applicable to an RAN AI scenario. In addition, the access network device is only required to interact with the OAM, so that the access network device may allocate a proper model identifier to the terminal device when learning the capability of the terminal device, which helps reduce complexity of a process of allocating the model identifier.

It should be noted that, due to a limited coverage capability of the access network device, the terminal device may move within coverage of different access network devices. In this case, the model identifiers stored in the access network device to be allocated to the terminal device are required to be synchronized among different access network devices.

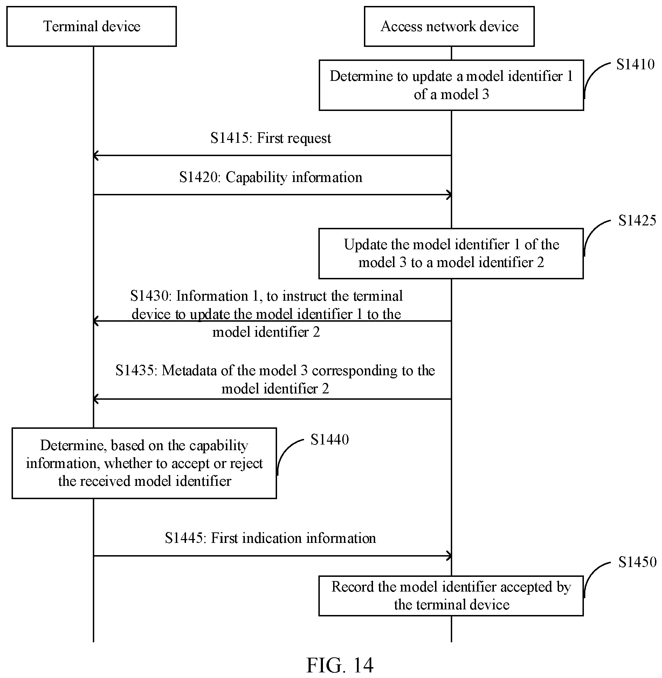

FIG. 14 is a schematic flowchart of updating of a first model identifier according to an embodiment of this application. The method illustrated in FIG. 14 includes step S1410 to step S1450. It should be understood that, the method illustrated in FIG. 14 may be applied to an RAN AI scenario. In addition, in the solution shown in FIG. 14, the metadata of the first model may not be transmitted by using the model identifier, but by using information other than the model identifier. It is assumed that the network device has allocated a model identifier 1 of a model 3 to the terminal device.

In step S1410, the access network device determines to update the model identifier 1 of the model 3.

In some implementations, the access network device may determine, based on reasons such as model version upgrade of the model 3 or expiration of a validity period of the model 3, to update the model identifier 1 of the model 3 for the terminal device. In embodiments of this application, a reason for triggering the update of the model identifier 1 is not limited.

In step S1415, the access network device transmits a first request to the terminal device, where the first request is used to request capability information of the terminal device.

In step S1420, the terminal device transmits the capability information to the access network device in response to the first request.

In some implementations, the capability information may include the model identifier 1 of the model 3.

In step S1425, the access network device updates the model identifier 1 of the model 3 to a model identifier 2.

In some implementations, the access network device may determine a model identifier to be updated, based on information that is associated with a model and that is obtained from the OAM, local information, capability information, and a model identifier that is received by the terminal device and that is stored in the access network device.

For example, the capability information indicates that the terminal device may support an AI-based positioning function. The local information indicates that a maximum quantity of model identifiers that the access network device can allocate to the terminal device is 1. The model identifier that is accepted by the terminal device is the model identifier 1, which is indicated in the capability information and is stored in the access network device. The access network device obtains from the OAM information indicating updating a model version of the model 3 from a model version 1 to a model version 2. Accordingly, the access network device may update the model identifier of the model 3 from the model identifier 1 to the model identifier 2, where the model identifier 1 is generated based on the model version 1, and the model identifier 2 is generated based on the model version 2.

In step S1430, the access network device transmits information 1 to the terminal device, to instruct the terminal device to update the model identifier 1 to the model identifier 2.

In step S1435, the access network device transmits, to the terminal device, metadata of the model 3 corresponding to the model identifier 2.

It should be noted that, if the model identifier 2 includes metadata, the metadata described above is not required to be additionally transmitted. In this case, the access network device directly transmits the model identifier 2 to the terminal device.

In step S1440, the terminal device determines, based on the capability information, whether to accept or reject the received model identifier.

For the above solution in which the terminal device determines whether to accept or reject the received model identifier, reference may be made to the foregoing description. For brevity, details are not described herein again.

In step S1445, the terminal device transmits first indication information to the access network device to indicate that the model identifier 2 is accepted.

In step S1450, the access network device updates the model identifier that is accepted by the terminal device and that is recorded, that is, the model identifier 2.

In some implementations, the access network device may record the metadata of the model corresponding to the model identifier 2.

In embodiments of this application, the access network device updates the model identifier information for the terminal device by comparison of one or more of stored information (that is, the stored model identifier received by the terminal device), latest capability information of the terminal device, or possible updated model information from the OAM. This helps improve properness of the updated model identifier.

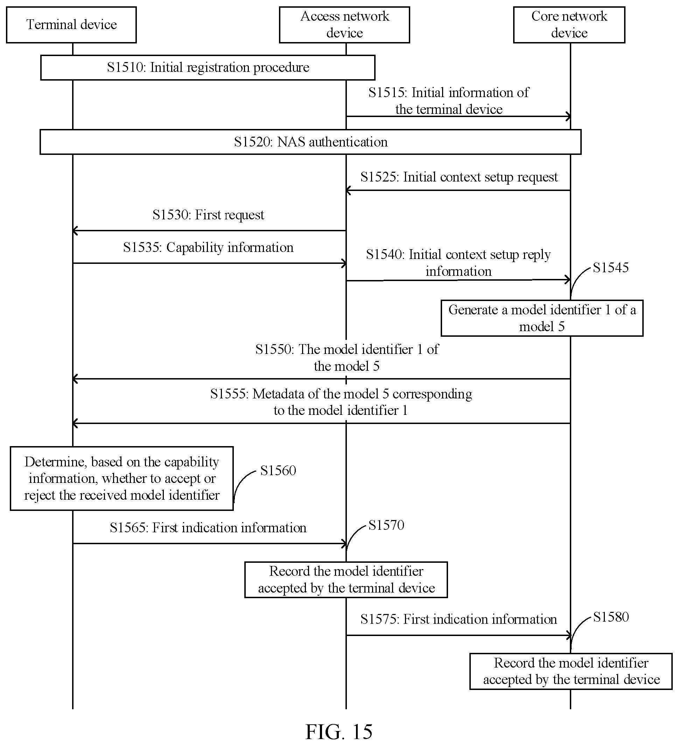

FIG. 15 is a schematic flowchart of allocation of a first model identifier according to another embodiment of this application. The method illustrated in FIG. 15 includes step S1510 to step S1580. It should be understood that, the method illustrated in FIG. 15 may be applied to an RAN AI scenario, a transfer learning scenario, a federated learning scenario, and the like. In addition, in the solution shown in FIG. 15, the metadata of the first model may not be transmitted by using the model identifier, but by using information other than the model identifier.

In step S1510, an initial registration procedure is performed between a terminal device and an access network device.

In some implementations, since information transmitted during the initial registration procedure is neither encrypted nor integrity protected, to improve transmission security of capability information, no capability information is carried in messages transmitted during the initial registration procedure.

In step S1515, the access network device transmits initial information of the terminal device to a core network device.

In some implementations, the initial information of the terminal device does not include capability information of the terminal device.

In step S1520, the terminal device completes NAS authentication.

In step S1525, the core network device transmits an initial context setup request to the access network device.

In some implementations, the initial context setup request is used to trigger the access network device to transmit a first request to the terminal device, to request the capability information of the terminal device.

In step S1530, the access network device transmits a first request to the terminal device, where the first request is used to request capability information of the terminal device.

In step S1535, the terminal device transmits the capability information to the access network device in response to the first request.

In step S1540, the access network device transmits initial context setup reply information to the core network device, where the initial context setup reply information includes the capability information.

In step S1545, the core network device generates a model identifier 1 of a model 5.

In some implementations, the core network device may determine, based on information that is associated with a model and that is obtained from OAM and/or OTT, local information, and capability information, that models supported by the terminal device include the model 5, and generate the model identifier of the model 5. For a process of generating the model identifier information, reference may be made to the foregoing description (for example, the process of generating the model information in the solution shown in FIG. 13).

In step S1550, the core network device transmits the model identifier 1 of the model 5 to the terminal device by using the access network device.

In step S1555, the core network device transmits, to the terminal device by using the access network device, metadata of the model 5 corresponding to the model identifier 1.

It should be noted that if the model identifier 1 includes metadata, the process of transmitting the metadata in step S1555 may not be performed.

In step S1560, the terminal device determines, based on the capability information, whether to accept or reject the received model identifier.

In some implementations, it is assumed that the terminal device is required to execute a model having a positioning function. In this case, the terminal device may determine, based on the mapping relationship between the model identifiers and the metadata described above, the metadata of the model 5 associated with the model identifier 1, and determine, based on a model function described in the metadata, whether the model 5 has a positioning function. If the model 5 has a positioning function, the terminal device accepts the model identifier 1 of the model 5, and performs step S1565. If the model 5 does not have a positioning function, the terminal device rejects the model identifier 1 of the model 5, and the terminal device transmits indication information to the access network device to indicate that the model identifier 1 is rejected.

In step S1565, the terminal device transmits first indication information to the access network device to indicate that the model identifier 1 is accepted.

In step S1570, the access network device records the model identifier accepted by the terminal device, that is, the model identifier 1.

In step S1575, the access network device transmits first indication information to the core network to indicate that the model identifier 1 is accepted.

In some implementations, the access network device may transmit, to the core network device, metadata of the model corresponding to the model identifier 1.

In step S1580, the core network device records the model identifier accepted by the terminal device, that is, the model identifier 1.

In some implementations, the core network device may record the metadata of the model corresponding to the model identifier 1.

In embodiments of this application, compared to the solution of allocating the model identifier by the access network device, the solution of allocating the model identifier by the core network device to the terminal device helps improve globality in model identifier allocation. In addition, in the solution of allocating the model identifier by the core network device to the terminal device, the model identifier for the terminal device may not be synchronized between access network devices.

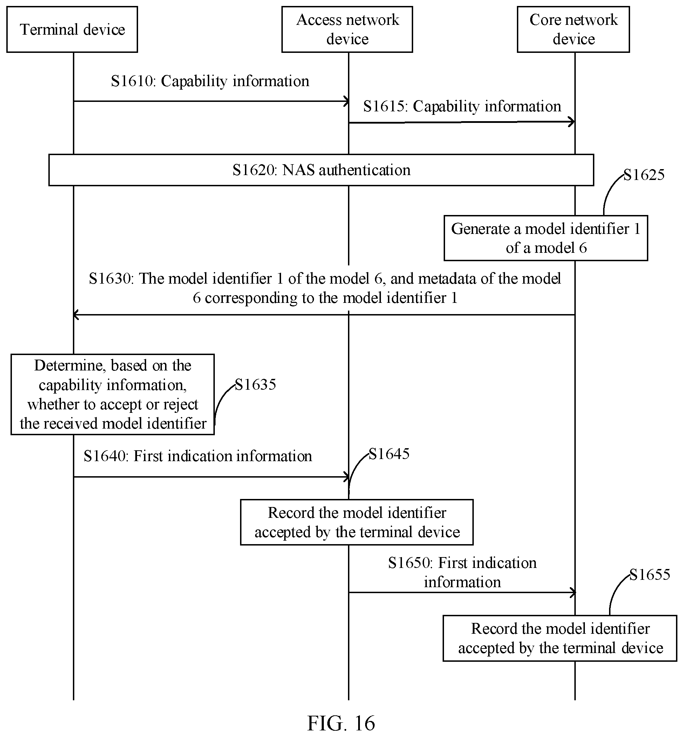

FIG. 16 is a schematic flowchart of allocation of a first model identifier according to another embodiment of this application. The method illustrated in FIG. 16 includes step S1610 to step S1655. It should be understood that, the method illustrated in FIG. 16 may be applied to an RAN AI scenario, a transfer learning scenario, a federated learning scenario, and the like. In addition, in the solution shown in FIG. 16, the metadata of the first model may not be transmitted by using the model identifier, but by using information other than the model identifier.

In step S1610, a terminal device transmits capability information to an access network device.

In some implementations, the capability information may be carried in a mobility registration request message. Generally, information transmitted in a mobility registration process is encrypted and integrity protected. Therefore, carrying the capability information in the mobility registration request message helps improve transmission security of the capability information.

In some implementations, the capability information is used to indicate allocating model identifier information to the terminal device or updating model identifier information for the terminal device.

In step S1615, the access network device transmits the capability information to a core network device.

In some implementations, the capability information may be carried in an initial message of the terminal device.

In step S1620, the terminal device completes NAS authentication.

In some implementations, since the mobility registration procedure is performed after an initial registration procedure, the terminal device has already completed NAS authentication during the initial registration procedure prior to performing the mobility registration procedure. In this case, the NAS authentication in the mobility registration procedure may or may not be performed.

In step S1625, the core network device generates a model identifier 1 of a model 6.

In some implementations, the core network device may determine, based on information that is associated with a model and that is obtained from OAM and/or OTT, local information, and capability information, that models supported by the terminal device include the model 6, and generate the model identifier of the model 6. For a process of generating the model identifier information, reference may be made to the foregoing description (for example, the process of generating the model information in the solution shown in FIG. 13).

In step S1630, the core network device transmits, to the terminal device by using the access network device, the model identifier 1 of the model 6 and metadata of the model 5 corresponding to the model identifier 1.

In some implementations, the model identifier 1 and/or the metadata of the model 5 corresponding to the model identifier 1 may be carried in a context setup request to be transmitted by the core network device to the access network device. Accordingly, the access network device may carry the model identifier 1 and/or the metadata of the model 5 corresponding to the model identifier 1 in a first request to be transmitted to the terminal device.

It should be noted that if the model identifier 1 includes metadata, the metadata in step S1630 may not be transmitted separately.

In step S1635, the terminal device determines, based on the capability information, whether to accept or reject the received model identifier.

In some implementations, it is assumed that the terminal device is required to execute a model having a positioning function. In this case, the terminal device may determine, based on the mapping relationship between the model identifiers and the metadata described above, the metadata of the model 6 associated with the model identifier 1, and determine, based on a model function described in the metadata, whether the model 6 has a positioning function. If the model 6 has a positioning function, the terminal device accepts the model identifier 1 of the model 6, and performs step S1640. If the model 6 does not have a positioning function, the terminal device rejects the model identifier 1 of the model 6, and the terminal device transmits indication information to the access network device to indicate that the model identifier 1 is rejected.

In step S1640, the terminal device transmits first indication information to the access network device to indicate that the model identifier 1 is accepted.

In some implementations, the first indication information may be carried in the capability information.

In step S1645, the access network device records the model identifier accepted by the terminal device, that is, the model identifier 1.

In some scenarios (for example, RAN AI), the access network device may record the model identifier accepted by the terminal device. In another scenario, the access network device may not record the model identifier accepted by the terminal device.

In step S1650, the access network device transmits first indication information to the core network to indicate that the model identifier 1 is accepted.

In some implementations, the access network device may transmit, to the core network device, metadata of the model corresponding to the model identifier 1.

In some implementations, the first indication information and/or the metadata of the model corresponding to the model identifier 1 may be carried in a context reply message.

In step S1655, the core network device records the model identifier accepted by the terminal device, that is, the model identifier 1.

In some implementations, the core network device may record the metadata of the model corresponding to the model identifier 1.

In embodiments of this application, the terminal device may autonomously trigger transmission of the capability information, which helps improve timeliness of the terminal device transmitting the capability information.

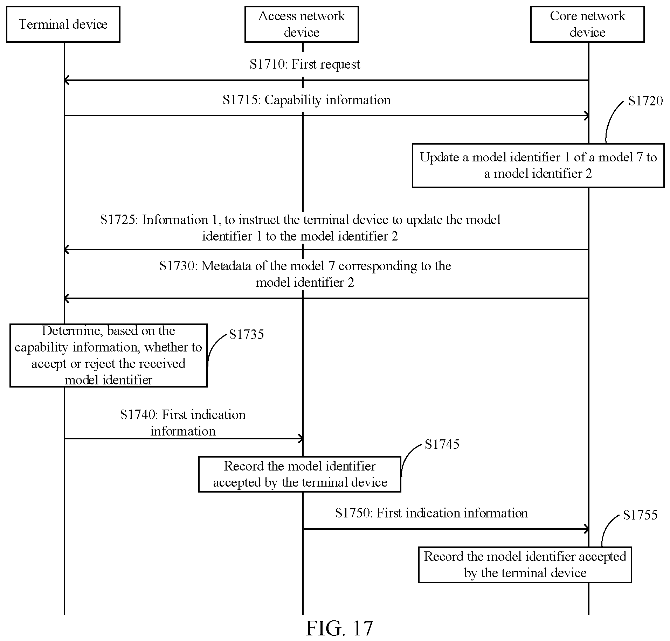

FIG. 17 is a schematic flowchart of updating of a first model identifier according to another embodiment of this application. The method shown in FIG. 17 includes step S1710 to step S1755. It should be understood that, the method illustrated in FIG. 17 may be applied to an RAN AI scenario, a transfer learning scenario, a federated learning scenario, and the like. In addition, in the solution shown in FIG. 17, the metadata of the first model may not be transmitted by using the model identifier, but by using information other than the model identifier. It is assumed that the network device has allocated a model identifier 1 of a model 7 to the terminal device.

In step S1710, a core network device transmits a first request to a terminal device by using an access network device, where the first request is used to request capability information of the terminal device.

In some implementations, the first request may be carried in a configuration update request.

In step S1715, the terminal device transmits, in response to the first request, the capability information to the core network device by using the access network device.

In some implementations, the capability information may include the model identifier 1 of the model 7.

In some implementations, the capability information may be carried in a configuration update reply message and/or a mobility registration update message.

In step S1720, the core network device updates the model identifier 1 of the model 7 to a model identifier 2.

In some implementations, the core network device may determine a model identifier to be updated, based on information that is associated with a model and that is obtained from the OAM and/or OTT, local information, capability information, and a model identifier that is received by the terminal device and that is stored in the core network device.

For example, the capability information indicates that the terminal device may support an AI-based positioning function. The local information indicates that a maximum quantity of model identifiers that the access network device can allocate to the terminal device is 1. The model identifier that is accepted by the terminal device is the model identifier 1, which is indicated in the capability information and is stored in the access network device. The core network device updates a model version of the model 7, that is obtained from the OAM, from a model version 1 to a model version 2. Accordingly, the core network device may update the model identifier of the model 7 from the model identifier 1 to the model identifier 2, where the model identifier 1 is generated based on the model version 1, and the model identifier 2 is generated based on the model version 2.

In step S1725, the core network device transmits information 1 to the terminal device by using the access network device, to instruct the terminal device to update the model identifier 1 to the model identifier 2.

In some implementations, the information 1 may be carried in a request (also referred to as an "update RAN context request") used for requesting updating of context of the access network device. Certainly, in embodiments of this application, the information 1 may alternatively be carried in other information.

In step S1730, the core network device transmits, to the terminal device by using the access network device, metadata of the model 7 corresponding to the model identifier 2.

In some implementations, the metadata of the model 7 corresponding to the model identifier 2 may be carried in a request (also referred to as an "update RAN context request") used for requesting updating of context of the access network device.

It should be noted that, if the model identifier 2 includes metadata, the metadata described above is not required to be additionally transmitted. In this case, the access network device directly transmits the model identifier 2 to the terminal device.

In step S1735, the terminal device determines, based on the capability information, whether to accept or reject the received model identifier.

For the above solution in which the terminal device determines whether to accept or reject the received model identifier, reference may be made to the foregoing description. For brevity, details are not described herein again.

In some implementations, if the terminal device accepts the model identifier, the terminal device updates the model identifier 1 of the model 7 to the model identifier 2, and updates the metadata of the model 7 corresponding to the model identifier 1 to metadata of the model 7 corresponding to the model identifier 2.

In step S1740, the terminal device transmits first indication information to the access network device to indicate that the model identifier 2 is accepted.

In step S1745, the access network device updates the model identifier that is accepted by the terminal device and that is recorded, that is, the model identifier 2.

In some implementations, the access network device may record the metadata of the model corresponding to the model identifier 2.

In step S1750, the access network device transmits first indication information to the core network to indicate that the model identifier 2 is accepted.

In some implementations, the access network device may transmit, to the core network device, metadata of the model corresponding to the model identifier 2.

In some implementations, the first indication information and/or the metadata of the model corresponding to the model identifier 2 may be carried in a context update reply message.

In step S1755, the core network device records the model identifier accepted by the terminal device, that is, the model identifier 2.

In some implementations, the core network device may record the metadata of the model corresponding to the model identifier 2.

In embodiments of this application, the access network device updates the model identifier information for the terminal device by comparison of one or more of stored information (that is, the stored model identifier received by the terminal device), latest capability information of the terminal device, or possible updated model information from the OAM. This helps improve properness of the updated model identifier. In addition, in embodiments of this application, the core network device may transmit updated model identifier information to the terminal device, which helps reduce transmission overheads.

It should be noted that, part or all of the plurality of core network devices mentioned above may be the same core network device. Certainly, in embodiments of this application, the plurality of core network devices may alternatively be different core network devices. The plurality of core network devices include at least two of the following: a first core network device, a second core network device, a third core network device, or a fourth core network device.

In addition, part or all of the plurality of access network devices mentioned above may be the same access network device. Certainly, in embodiments of this application, the plurality of access network devices may alternatively be different access network devices. The plurality of access network devices include at least two of the following: a first access network device, a second access network device, a third access network device, or a fourth access network device.

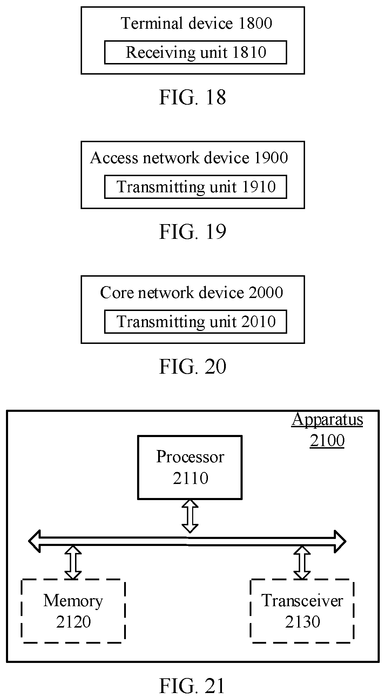

The method embodiments of this application are described above in detail with reference to FIG. 1 to FIG. 17. Apparatus embodiments of this application are described below in detail with reference to FIG. 18 to FIG. 21. It should be understood that the descriptions of the method embodiments correspond to descriptions of the apparatus embodiments, and therefore, for parts that are not described in detail, reference may be made to the foregoing method embodiments.

FIG. 18 is a schematic diagram of a terminal device according to an embodiment of this application. The terminal device 1800 shown in FIG. 18 includes a receiving unit 1810.

The receiving unit 1810 is configured to receive first information transmitted by a network device, the first information carrying a first model identifier, where the first model identifier includes one or more of the following information: second information, where the second information is associated with a first model; or third information, where the third information is associated with a provider of the first model.

In some implementations, in a case that the first model identifier includes the second information, the second information includes one or more of the following: fourth information, where the fourth information includes information about the first model identifier; fifth information, where the fifth information includes model version information of the first model; sixth information, where the sixth information includes metadata of the first model; or seventh information, where the seventh information is used to indicate whether the metadata of the first model is carried in the first model identifier.

In some implementations, in a case that the second information includes the fourth information, the information about the first model identifier includes one or more of the following: content of the first model identifier; information of an identifier type of the first model identifier; information used to indicate whether the first model identifier corresponds to one model or to a plurality of models; or information used to indicate whether the content of the first model identifier is determined based on an identifier of a first network slice associated with the first model.

In some implementations, in a case that the information about the first model identifier includes the identifier type of the first model identifier, the identifier type is used to indicate one of the following: the identifier type of the first model identifier being a logical identifier; or the identifier type of the first model identifier being a physical identifier.

In some implementations, in a case that the information about the first model identifier includes the content of the first model identifier, and the first model is associated with the first network slice, the content of the first model identifier is determined based on the identifier of the first network slice.

In some implementations, in a case that the second information includes the sixth information, the metadata of the first model is used to indicate one or more of the following: model information of the first model; a model function of the first model; a model management operation supported by the first model; a first mapping relationship between the first model identifier of the first model and a second model identifier of the first model, where the second model identifier is an external model identifier used external to a communications system; or a second mapping relationship between the first model identifier of the first model and a model file of the first model.

In some implementations, in a case that the first information includes the third information, the third information includes domain name information corresponding to the provider of the first model.

In some implementations, the first information is used to allocate the first model identifier to the terminal device.

In some implementations, the first information is used to update a model identifier for the terminal device, and the first model identifier is an updated model identifier.

In some implementations, the network device is a core network device, and the receiving unit is configured to receive the first information transmitted by the core network device.

In some implementations, the network device is an access network device.

In some implementations, the terminal device includes: a first transmitting unit, configured to transmit first indication information to the network device, where the first indication information is used to indicate whether the terminal device accepts or rejects the first model identifier.

In some implementations, the network device is a core network device, and the first transmitting unit is further configured to transmit the first indication information to the core network device.

In some implementations, the network device is an access network device.

In some implementations, the terminal device further includes: a second transmitting unit, configured to transmit capability information to the network device, where the capability information is used to indicate one or more of the following: a model supported by the terminal device; a model management operation supported by the terminal device; a model function of a model supported by the terminal device; whether the terminal device supports performing model training; or whether the terminal device supports performing model inference.

In some implementations, the second transmitting unit is further configured to transmit the capability information to the network device after the terminal device completes NAS authentication.

In some implementations, the capability information is carried in a mobility registration request message.

In some implementations, the network device is a core network device, and the second transmitting unit is further configured to transmit the capability information to the core network device.

In some implementations, the network device is an access network device.

In some implementations, the receiving unit is further configured to receive a first request transmitted by the network device, where the first request is used to request the capability information of the terminal device; and the second transmitting unit is further configured to transmit the capability information to the network device in response to the first request.

In some implementations, the network device is a core network device, and the receiving unit is further configured to receive the first request transmitted by the core network device.

FIG. 19 is a schematic diagram of an access network device according to an embodiment of this application. The access network device 1900 shown in FIG. 19 includes a transmitting unit 1910.

The transmitting unit 1910 is configured to transmit first information to a terminal device, the first information carrying a first model identifier, where the first model identifier includes one or more of the following information: second information, where the second information is associated with a first model; or third information, where the third information is associated with a provider of the first model.

In some implementations, in a case that the first model identifier includes the second information, the second information includes one or more of the following: fourth information, where the fourth information includes information about the first model identifier; fifth information, where the fifth information includes model version information of the first model; sixth information, where the sixth information includes metadata of the first model; or seventh information, where the seventh information is used to indicate whether the metadata of the first model is carried in the first model identifier.

In some implementations, in a case that the second information includes the fourth information, the information about the first model identifier includes one or more of the following: content of the first model identifier; information of an identifier type of the first model identifier; information used to indicate whether the first model identifier corresponds to one model or to a plurality of models; or information used to indicate whether the content of the first model identifier is determined based on an identifier of a first network slice associated with the first model.

In some implementations, in a case that the information about the first model identifier includes the identifier type of the first model identifier, the identifier type is used to indicate one of the following: the identifier type of the first model identifier being a logical identifier; or the identifier type of the first model identifier being a physical identifier.

In some implementations, in a case that the information about the first model identifier includes the content of the first model identifier, and the first model is associated with the first network slice, the content of the first model identifier is determined based on the identifier of the first network slice.

In some implementations, in a case that the second information includes the sixth information, the metadata of the first model is used to indicate one or more of the following: model information of the first model; a model function of the first model; a model management operation supported by the first model; a first mapping relationship between the first model identifier of the first model and a second model identifier of the first model, where the second model identifier is an external model identifier used external to a communications system; or a second mapping relationship between the first model identifier of the first model and a model file of the first model.

In some implementations, in a case that the first information includes the third information, the third information includes domain name information corresponding to the provider of the first model.

In some implementations, the first information is used to allocate the first model identifier to the terminal device.

In some implementations, the first information is used to update a model identifier for the terminal device, and the first model identifier is an updated model identifier.

In some implementations, the access network device further includes: a first receiving unit, configured to receive the first information transmitted by a core network device.

In some implementations, the access network device includes: a second receiving unit, configured to receive first indication information transmitted by the terminal device, where the first indication information is used to indicate whether the terminal device accepts or rejects the first model identifier.

In some implementations, the transmitting unit is further configured to transmit the first indication information to the core network device.

In some implementations, the access network device further includes: a third receiving unit, configured to receive capability information transmitted by the terminal device, where the capability information is used to indicate one or more of the following: a model supported by the terminal device; a model management operation supported by the terminal device; a model function of a model supported by the terminal device; whether the terminal device supports performing model training; or whether the terminal device supports performing model inference.

In some implementations, the third receiving unit is further configured to: after the terminal device completes NAS authentication, receive the capability information transmitted by the terminal device.

In some implementations, the capability information is carried in one or more of the following: a mobility registration request message; a context setup response message; an initial context setup response message; or a response message for a context update request, where the context update request is used to request updating of context of the access network device.

In some implementations, the transmitting unit is further configured to transmit the capability information to the core network device.

In some implementations, the transmitting unit is further configured to transmit a first request to the terminal device, where the first request is used to request the capability information; and the third receiving unit is further configured to receive, in response to the first request, the capability information transmitted by the terminal device.

In some implementations, the access network device further includes: a fourth receiving unit, configured to receive the first request transmitted by a core network device.

In some implementations, the first request is carried in one or more of the following: an initial context setup request; a context setup request; or a context update request. The context update request is used to request updating of context of the access network device.

FIG. 20 is a schematic diagram of a core network device according to an embodiment of this application. The core network device 2000 shown in FIG. 20 includes a transmitting unit 2010.

The transmitting unit 2010 is configured to transmit first information to a terminal device, the first information carrying a first model identifier, where the first model identifier includes one or more of the following information: second information, where the second information is associated with a first model; or third information, where the third information is associated with a provider of the first model.

In some implementations, in a case that the first model identifier includes the second information, the second information includes one or more of the following: fourth information, where the fourth information includes information about the first model identifier; fifth information, where the fifth information includes model version information of the first model; sixth information, where the sixth information includes metadata of the first model; or seventh information, where the seventh information is used to indicate whether the metadata of the first model is carried in the first information.

In some implementations, in a case that the second information includes the fourth information, the information about the first model identifier includes one or more of the following: content of the first model identifier; information of an identifier type of the first model identifier; information used to indicate whether the first model identifier corresponds to one model or to a plurality of models; or information used to indicate whether the content of the first model identifier is determined based on an identifier of a first network slice associated with the first model.

In some implementations, in a case that the information about the first model identifier includes the identifier type of the first model identifier, the identifier type is used to indicate one of the following: the identifier type of the first model identifier being a logical identifier; or the identifier type of the first model identifier being a physical identifier.

In some implementations, in a case that the information about the first model identifier includes the content of the first model identifier, and the first model is associated with the first network slice, the content of the first model identifier is determined based on the identifier of the first network slice.

In some implementations, in a case that the second information includes the sixth information, the metadata of the first model is used to indicate one or more of following: model information of the first model; a model function of the first model; a model management operation supported by the first model; a first mapping relationship between the first model identifier of the first model and a second model identifier of the first model, where the second model identifier is an external model identifier used external to a communications system; or a second mapping relationship between the first model identifier of the first model and a model file of the first model.

In some implementations, in a case that the first information includes the third information, the third information includes domain name information corresponding to the provider of the first model.

In some implementations, the first information is used to allocate the first model identifier to the terminal device.

In some implementations, the first information is used to update a model identifier for the terminal device, and the first model identifier is an updated model identifier.

In some implementations, the transmitting unit is configured to transmit the first information to the access network device.

In some implementations, the core network device includes: a first receiving unit, configured to receive first indication information transmitted by an access network device, where the first indication information is used to indicate whether the terminal device accepts or rejects the first model identifier.

In some implementations, the core network device further includes: a second receiving unit, configured to receive capability information transmitted by the access network device, where the capability information is used to indicate one or more of the following: a model supported by the terminal device; a model management operation supported by the terminal device; a model function of a model supported by the terminal device; whether the terminal device supports performing model training; or whether the terminal device supports performing model inference.

In some implementations, the second receiving unit is configured to: after the terminal device completes NAS authentication, receive the capability information transmitted by the access network device.

In some implementations, the capability information is carried in one or more of the following: a mobility registration request message; an initial context setup response message; a context setup response message; or a response message for a context update request, where the context update request is used to request updating of context of the access network device.

In some implementations, the transmitting unit is further configured to transmit a first request to the access network device, where the first request is used to request the capability information; and the second receiving unit is configured to receive, in response to the first request, the capability information transmitted by the access network device.

In some implementations, the first request is carried in one or more of the following: an initial context setup request; a context setup request; or a context update request. The context update request is used to request updating of context of the access network device.

In an optional embodiment, the receiving unit 1810 may be a transceiver 2130. The terminal device 1800 may further include a processor 2110 and a memory 2120, as shown in FIG. 21.

In an optional embodiment, the transmitting unit 1910 may be a transceiver 2130. The access network device 1900 may further include a processor 2110 and a memory 2120, which are specifically shown in FIG. 21.

In an optional embodiment, the transmitting unit 2010 may be a transceiver 2130. The core network device 2000 may further include a processor 2110 and a memory 2120, which are specifically shown in FIG. 21.

FIG. 21 is a schematic diagram of a structure of a communications apparatus according to an embodiment of this application. Dashed lines in FIG. 21 indicate that a unit or module is optional. The apparatus 2100 may be configured to implement the methods described in the foregoing method embodiments. The apparatus 2100 may be a chip, a terminal device, or a network device.

The apparatus 2100 may include one or more processors 2110. The processor 2110 may support the apparatus 2100 in implementing the methods described in the foregoing method embodiments. The processor 2110 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2100 may further include one or more memories 2120. The memory 2120 stores a program, where the program may be executed by the processor 2110, to cause the processor 2110 to execute the methods described in the method embodiments. The memory 2120 may be independent of the processor 2110 or may be integrated into the processor 2110.

The apparatus 2100 may further include a transceiver 2130. The processor 2110 may communicate with another device or chip by using the transceiver 2130. For example, the processor 2110 may transmit data to and receive data from another device or chip through the transceiver 2130.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first information transmitted by a network device, the first information carrying a first model identifier, wherein the first model identifier comprises one or more of following information:
second information, wherein the second information is associated with a first model; or
third information, wherein the third information is associated with a provider of the first model.

2. The method according to claim 1, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first model identifier.

3. The method according to claim 2, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

4. The method according to claim 3, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

5. The method according to claim 3 or 4, wherein in a case that the information about the first model identifier comprises the content of the first model identifier, and the first model is associated with the first network slice, the content of the first model identifier is determined based on the identifier of the first network slice.

6. The method according to claim 2, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

7. The method according to any one of claims 1 to 6, wherein in a case that the first information comprises the third information, the third information comprises domain name information corresponding to the provider of the first model.

8. The method according to any one of claims 1 to 7, wherein the first information is used for assigning the first model identifier to the terminal device.

9. The method according to any one of claims 1 to 7, wherein the first information is used for updating a model identifier for the terminal device, and the first model identifier is an updated model identifier.

10. The method according to any one of claims 1 to 9, wherein the network device is a core network device, and the receiving, by the terminal device, the first information transmitted by the network device comprises:
receiving, by the terminal device, the first information transmitted by the core network device.

11. The method according to any one of claims 1 to 9, wherein the network device is an access network device.

12. The method according to any one of claims 1 to 9, wherein the method comprises:
transmitting, by the terminal device, first indication information to the network device, wherein the first indication information is used to indicate whether the terminal device accepts or rejects the first model identifier.

13. The method according to claim 12, wherein the network device is a core network device, and the transmitting, by the terminal device, the first indication information to the network device comprises:
transmitting, by the terminal device, the first indication information to the core network device.

14. The method according to claim 12, wherein the network device is an access network device.

15. The method according to any one of claims 1 to 9, wherein the method further comprises:
transmitting, by the terminal device, capability information to the network device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

16. The method according to claim 15, wherein the transmitting, by the terminal device, the capability information to the network device comprises:
transmitting, by the terminal device, the capability information to the network device after the terminal device completes non-access stratum NAS authentication.

17. The method according to claim 15, wherein the capability information is carried in a mobility registration request message.

18. The method according to any one of claims 15 to 17, wherein the network device is a core network device, and the transmitting, by the terminal device, the capability information to the network device comprises:
transmitting, by the terminal device, the capability information to the core network device.

19. The method according to any one of claims 15 to 17, wherein the network device is an access network device.

20. The method according to any one of claims 15 to 17, wherein the method further comprises:
receiving, by the terminal device, a first request transmitted by the network device, wherein the first request is used to request the capability information; and
the transmitting, by the terminal device, the capability information to the network device comprises:
transmitting, by the terminal device, the capability information to the network device in response to the first request.

21. The method according to claim 20, wherein the network device is a core network device, and the receiving, by the terminal device, the first request transmitted by the network device comprises:
receiving, by the terminal device, the first request transmitted by the core network device.

22. A wireless communication method, comprising:
transmitting, by an access network device, first information to a terminal device, the first information carrying a first model identifier, wherein the first model identifier comprises one or more of following information:
second information, wherein the second information is associated with a first model; or
third information, wherein the third information is associated with a provider of the first model.

23. The method according to claim 22, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first model identifier.

24. The method according to claim 23, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

25. The method according to claim 24, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

26. The method according to claim 24 or 25, wherein in a case that the information about the first model identifier comprises the content of the first model identifier, and the first model is associated with the first network slice, the content of the first model identifier is determined based on the identifier of the first network slice.

27. The method according to claim 23, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

28. The method according to any one of claims 22 to 27, wherein in a case that the first information comprises the third information, the third information comprises domain name information corresponding to the provider of the first model.

29. The method according to any one of claims 22 to 28, wherein the first information is used for assigning the first model identifier to the terminal device.

30. The method according to any one of claims 22 to 28, wherein the first information is used for updating a model identifier for the terminal device, and the first model identifier is an updated model identifier.

31. The method according to any one of claims 22 to 30, wherein before the transmitting, by the access network device, the first information to the terminal device, the method further comprises:
receiving, by the access network device, the first information transmitted by a core network device.

32. The method according to any one of claims 22 to 30, wherein the method comprises:
receiving, by the access network device, first indication information transmitted by the terminal device, wherein the first indication information is used to indicate whether the terminal device accepts or rejects the first model identifier.

33. The method according to claim 32, wherein the method comprises:
transmitting, by the access network device, the first indication information to a core network device.

34. The method according to any one of claims 22 to 33, wherein the method further comprises:
receiving, by the access network device, capability information transmitted by the terminal device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

35. The method according to claim 34, wherein the receiving, by the access network device, the capability information transmitted by the terminal device comprises:
after the terminal device completes non-access stratum NAS authentication, receiving, by the access network device, the capability information transmitted by the terminal device.

36. The method according to claim 34, wherein the capability information is carried in one or more of following:
a mobility registration request message;
a context setup response message;
an initial context setup response message; or
a response message for a context update request, wherein the context update request is used to request updating of context of the access network device.

37. The method according to any one of claims 34 to 36, wherein the method further comprises:
transmitting, by the access network device, the capability information to a core network device.

38. The method according to claim 35 or 36, wherein the method further comprises:
transmitting, by the access network device, a first request to the terminal device, wherein the first request is used to request the capability information; and
the receiving, by the access network device, the capability information transmitted by the terminal device comprises:
receiving, by the access network device in response to the first request, the capability information transmitted by the terminal device.

39. The method according to claim 38, wherein before the transmitting, by the network device, the first request to the terminal device, the method further comprises:
receiving, by the access network device, the first request transmitted by a core network device.

40. The method according to claim 38, wherein the first request is carried in one or more of following:
an initial context setup request;
a context setup request; or
a context update request, wherein the context update request is used to request updating of context of the access network device.

41. A wireless communication method, comprising:
transmitting, by a core network device, first information to a terminal device, the first information carrying a first model identifier, wherein the first model identifier comprises one or more of following information:
second information, wherein the second information is associated with a first model; or
third information, wherein the third information is associated with a provider of the first model.

42. The method according to claim 41, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first information.

43. The method according to claim 42, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

44. The method according to claim 43, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

45. The method according to claim 43 or 44, wherein in a case that the information about the first model identifier comprises the content of the first model identifier, and the first model is associated with the first network slice, the content of the first model identifier is determined based on the identifier of the first network slice.

46. The method according to claim 42, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

47. The method according to any one of claims 41 to 46, wherein in a case that the first information comprises the third information, the third information comprises domain name information corresponding to the provider of the first model.

48. The method according to any one of claims 41 to 47, wherein the first information is used for assigning the first model identifier to the terminal device.

49. The method according to any one of claims 41 to 47, wherein the first information is used for updating a model identifier for the terminal device, and the first model identifier is an updated model identifier.

50. The method according to any one of claims 41 to 49, wherein the transmitting, by the core network device, the first information to the terminal device comprises:
transmitting, by the core network device, the first information to an access network device, wherein the first information is transmitted by the access network device to the terminal device.

51. The method according to any one of claims 41 to 49, wherein the method comprises:
receiving, by the core network device, first indication information transmitted by an access network device, wherein the first indication information is used to indicate whether the terminal device accepts or rejects the first model identifier.

52. The method according to any one of claims 41 to 49, wherein the method further comprises:
receiving, by the core network device, capability information transmitted by an access network device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

53. The method according to claim 52, wherein the receiving, by the core network device, the capability information transmitted by the access network device comprises:
after the terminal device completes non-access stratum NAS authentication, receiving, by the core network device, the capability information transmitted by the access network device.

54. The method according to claim 52, wherein the capability information is carried in one or more of following:
a mobility registration request message;
an initial context setup response message;
a context setup response message; or
a response message for a context update request, wherein the context update request is used to request updating of context of the access network device.

55. The method according to any one of claims 52 to 54, wherein the method further comprises:
transmitting, by the core network device, a first request to the access network device, wherein the first request is used to request the capability information; and
the receiving, by the core network device, the capability information transmitted by the access network device comprises:
receiving, by the core network device in response to the first request, the capability information transmitted by the access network device.

56. The method according to claim 55, wherein the first request is carried in one or more of following:
an initial context setup request;
a context setup request; or
a context update request, wherein the context update request is used to request updating of context of the access network device.

57. A terminal device, comprising:
a receiving unit, configured to receive first information transmitted by a network device, the first information carrying a first model identifier, wherein the first model identifier comprises one or more of following information:
second information, wherein the second information is associated with a first model; or
third information, wherein the third information is associated with a provider of the first model.

58. The terminal device according to claim 57, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first model identifier.

59. The terminal device according to claim 58, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

60. The terminal device according to claim 59, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

61. The terminal device according to claim 59 or 60, wherein in a case that the information about the first model identifier comprises the content of the first model identifier, and the first model is associated with the first network slice, the content of the first model identifier is determined based on the identifier of the first network slice.

62. The terminal device according to claim 58, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

63. The terminal device according to any one of claims 57 to 62, wherein in a case that the first information comprises the third information, the third information comprises domain name information corresponding to the provider of the first model.

64. The terminal device according to any one of claims 57 to 63, wherein the first information is used for assigning the first model identifier to the terminal device.

65. The terminal device according to any one of claims 57 to 63, wherein the first information is used for updating a model identifier for the terminal device, and the first model identifier is an updated model identifier.

66. The terminal device according to any one of claims 57 to 65, wherein the network device is a core network device, and the receiving unit is configured to receive the first information transmitted by the core network device.

67. The terminal device according to any one of claims 57 to 65, wherein the network device is an access network device.

68. The terminal device according to any one of claims 57 to 66, wherein the terminal device comprises:
a first transmitting unit, configured to transmit first indication information to the network device, wherein the first indication information is used to indicate whether the terminal device accepts or rejects the first model identifier.

69. The terminal device according to claim 68, wherein the network device is a core network device, and the first transmitting unit is further configured to transmit the first indication information to the core network device.

70. The terminal device according to claim 68, wherein the network device is an access network device.

71. The terminal device according to any one of claims 57 to 65, wherein the terminal device further comprises:
a second transmitting unit, configured to transmit capability information to the network device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

72. The terminal device according to claim 71, wherein the second transmitting unit is further configured to transmit the capability information to the network device after the terminal device completes non-access stratum NAS authentication.

73. The terminal device according to claim 71, wherein the capability information is carried in a mobility registration request message.

74. The terminal device according to any one of claims 71 to 73, wherein the network device is a core network device, and the second transmitting unit is further configured to transmit the capability information to the core network device.

75. The terminal device according to any one of claims 71 to 73, wherein the network device is an access network device.

76. The terminal device according to any one of claims 71 to 73, wherein the receiving unit is further configured to receive a first request transmitted by the network device, wherein the first request is used to request the capability information; and
the second transmitting unit is further configured to transmit the capability information to the network device in response to the first request.

77. The terminal device according to claim 76, wherein the network device is a core network device, and the receiving unit is further configured to receive the first request transmitted by the core network device.

78. An access network device, comprising:
a transmitting unit, configured to transmit first information to a terminal device, the first information carrying a first model identifier, wherein the first model identifier comprises one or more of following information:
second information, wherein the second information is associated with a first model; or
third information, wherein the third information is associated with a provider of the first model.

79. The access network device according to claim 78, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first model identifier.

80. The access network device according to claim 79, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

81. The access network device according to claim 80, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

82. The access network device according to claim 80 or 81, wherein in a case that the information about the first model identifier comprises the content of the first model identifier, and the first model is associated with the first network slice, the content of the first model identifier is determined based on the identifier of the first network slice.

83. The access network device according to claim 79, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

84. The access network device according to any one of claims 78 to 83, wherein in a case that the first information comprises the third information, the third information comprises domain name information corresponding to the provider of the first model.

85. The access network device according to any one of claims 78 to 84, wherein the first information is used for assigning the first model identifier to the terminal device.

86. The access network device according to any one of claims 78 to 84, wherein the first information is used for updating a model identifier for the terminal device, and the first model identifier is an updated model identifier.

87. The access network device according to any one of claims 78 to 86, wherein the access network device further comprises:
a first receiving unit, configured to receive the first information transmitted by a core network device.

88. The access network device according to any one of claims 78 to 86, wherein the access network device comprises:
a second receiving unit, configured to receive first indication information transmitted by the terminal device, wherein the first indication information is used to indicate whether the terminal device accepts or rejects the first model identifier.

89. The access network device according to claim 88, wherein the transmitting unit is further configured to transmit the first indication information to a core network device.

90. The access network device according to any one of claims 78 to 86, wherein the access network device further comprises:
a third receiving unit, configured to receive capability information transmitted by the terminal device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

91. The access network device according to claim 90, wherein the third receiving unit is further configured to: after the terminal device completes non-access stratum NAS authentication, receive the capability information transmitted by the terminal device.

92. The access network device according to claim 90, wherein the capability information is carried in one or more of following:
a mobility registration request message;
a context setup response message;
an initial context setup response message; or
a response message for a context update request, wherein the context update request is used to request updating of context of the access network device.

93. The access network device according to any one of claims 90 to 92, wherein the transmitting unit is further configured to transmit the capability information to a core network device.

94. The access network device according to claim 91 or 92, wherein the transmitting unit is further configured to transmit a first request to the terminal device, wherein the first request is used to request the capability information; and
the third receiving unit is further configured to receive, in response to the first request, the capability information transmitted by the terminal device.

95. The access network device according to claim 94, wherein the access network device further comprises:
a fourth receiving unit, configured to receive the first request transmitted by a core network device.

96. The access network device according to claim 94, wherein the first request is carried in one or more of following:
an initial context setup request;
a context setup request; or
a context update request, wherein the context update request is used to request updating of context of the access network device.

97. A core network device, comprising:
a transmitting unit, configured to transmit first information to a terminal device, the first information carrying a first model identifier, wherein the first model identifier comprises one or more of following information:
second information, wherein the second information is associated with a first model; or
third information, wherein the third information is associated with a provider of the first model.

98. The core network device according to claim 97, wherein in a case that the first model identifier comprises the second information, the second information comprises one or more of following:
fourth information, wherein the fourth information comprises information about the first model identifier;
fifth information, wherein the fifth information comprises model version information of the first model;
sixth information, wherein the sixth information comprises metadata of the first model; or
seventh information, wherein the seventh information is used to indicate whether the metadata of the first model is carried in the first information.

99. The core network device according to claim 98, wherein in a case that the second information comprises the fourth information, the information about the first model identifier comprises one or more of following:
content of the first model identifier;
information of an identifier type of the first model identifier;
information used to indicate whether the first model identifier corresponds to one model or to a plurality of models; or
information used to indicate whether the content of the first model identifier is determined based on an identifier of a first network slice associated with the first model.

100. The core network device according to claim 99, wherein in a case that the information about the first model identifier comprises the identifier type of the first model identifier, the identifier type is used to indicate one of following:
the identifier type of the first model identifier being a logical identifier; or
the identifier type of the first model identifier being a physical identifier.

101. The core network device according to claim 99 or 100, wherein in a case that the information about the first model identifier comprises the content of the first model identifier, and the first model is associated with the first network slice, the content of the first model identifier is determined based on the identifier of the first network slice.

102. The core network device according to claim 98, wherein in a case that the second information comprises the sixth information, the metadata of the first model is used to indicate one or more of following:
model information of the first model;
a model function of the first model;
a model management operation supported by the first model;
a first mapping relationship between the first model identifier of the first model and a second model identifier of the first model, wherein the second model identifier is an external model identifier used external to a communications system; or
a second mapping relationship between the first model identifier of the first model and a model file of the first model.

103. The core network device according to any one of claims 97 to 102, wherein in a case that the first information comprises the third information, the third information comprises domain name information corresponding to the provider of the first model.

104. The core network device according to any one of claims 97 to 103, wherein the first information is used for assigning the first model identifier to the terminal device.

105. The core network device according to any one of claims 97 to 103, wherein the first information is used for updating a model identifier for the terminal device, and the first model identifier is an updated model identifier.

106. The core network device according to any one of claims 97 to 105, wherein the transmitting unit is configured to transmit the first information to the access network device.

107. The core network device according to any one of claims 97 to 106, wherein the core network device comprises:
a first receiving unit, configured to receive first indication information transmitted by an access network device, wherein the first indication information is used to indicate whether the terminal device accepts or rejects the first model identifier.

108. The core network device according to any one of claims 97 to 107, wherein the core network device further comprises:
a second receiving unit, configured to receive capability information transmitted by the access network device, wherein the capability information is used to indicate one or more of following:
a model supported by the terminal device;
a model management operation supported by the terminal device;
a model function of a model supported by the terminal device;
whether the terminal device supports performing model training; or
whether the terminal device supports performing model inference.

109. The core network device according to claim 108, wherein the second receiving unit is configured to: after the terminal device completes non-access stratum NAS authentication, receive the capability information transmitted by the access network device.

110. The core network device according to claim 108, wherein the capability information is carried in one or more of following:
a mobility registration request message;
an initial context setup response message;
a context setup response message; or
a response message for a context update request, wherein the context update request is used to request updating of context of the access network device.

111. The core network device according to any one of claims 108 to 110, wherein the transmitting unit is further configured to transmit a first request to the access network device, wherein the first request is used to request the capability information; and
the second receiving unit is configured to receive, in response to the first request, the capability information transmitted by the access network device.

112. The core network device according to claim 111, wherein the first request is carried in one or more of following:
an initial context setup request;
a context setup request; or
a context update request, wherein the context update request is used to request updating of context of the access network device.

113. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 21.

114. A network device, comprising a transceiver, a memory, and a processor, wherein the memory is configured to store a program, and the processor is configured to invoke the program in the memory and control the transceiver to transmit or receive a signal, to cause the network device to execute the method according to any one of claims 22 to 56.

115. An apparatus, comprising a processor configured to invoke a program from a memory, to cause the apparatus to execute the method according to any one of claims 1 to 56.

116. A chip, comprising a processor, configured to invoke a program from a memory to cause a device installed with the chip to execute the method according to any one of claims 1 to 56.

117. A computer-readable storage medium, wherein the computer-readable storage medium stores a program, and the program causes a computer to execute the method according to any one of claims 1 to 56.

118. A computer program product, comprising a program that causes a computer to execute the method according to any one of claims 1 to 56.

119. A computer program, wherein the computer program causes a computer to execute the method according to any one of claims 1 to 56.
